# FASCICULE DE BREVET EUROPEEN

(11) **EP 1 798 999 B1**
(45) Date de publication et mention de la délivrance du brevet: **30.11.2011**
(21) Numéro de dépôt: 06291924.6
(22) Date de dépôt: 14.12.2006
(51) Int. Cl.: H04W 88/06, H04N 5/445

(54) **Procédé de gestion du comportement d'une application interactive lors de la diffusion d'un programme selon la norme DVB-H**
Verfahren zur Verwaltung des Verhaltens einer interaktiven Anwendung während der Übertragung einer Sendung gemäss den DVB-H Standard
Method of managing the behaviour of an interactive application when broadcasting a program according to the DVB-H standard

(30) Priorité: 14.12.2005 FR 0512692
(43) Date de publication de la demande: 20.06.2007
(73) Titulaire: Sagem Mobiles, 75015 Paris (FR)
(72) Inventeur: Gresse Philippe, 95490 Vaureal (FR); Pecqueur Rémi, Wallace Apt B3G 92800 Puteaux (FR)
(74) Mandataire: Lecocq, Fabrice

(56) Documents cités:
- EP-A- 1 509 043
- WO-A-2006/051433
- GB-A- 2 407 738
- US-A1- 2003 088 778
- US-A1- 2005 209 927
- US-A1- 2005 273 833
- RAUCH C ET AL: "Hybrid Mobile Interactive Services combining DVB-T and GPRS" PROCEEDINGS OF EUROPEAN PERSONAL AND MOBILE COMMUNICATIONS CONFERENCE, XX, XX, 19 février 2001 (2001-02-19), pages 1-8, XP002278953
- HERRERO C ET AL: "Delivery of digital television to handheld devices" WIRELESS COMMUNICATION SYSTEMS, 2004, 1ST INTERNATIONAL SYMPOSIUM ON MAURITIUS 20-22 SEPT. 2004, PISCATAWAY, NJ, USA,IEEE, 20 septembre 2004 (2004-09-20), pages 240-244, XP010780751 ISBN: 0-7803-8472-5

## Description

### DOMAINE TECHNIQUE DE L'INVENTION

La présente invention se rapporte à la gestion d'applications d'un terminal mobile de radiocommunication. L'invention concerne plus particulièrement une méthode de gestion du comportement d'une application interactive, permettant par exemple :
1) de limiter la navigation des utilisateurs sur une page WAP (Wireless Application Protocol), lors de la diffusion d'un programme selon la norme DVB-H (Digital Video Broadcast - Handheld) ;
2) de limiter le temps d'ouverture de cette même page WAP en envoyant un premier message de chargement mémoire tampon "pass" du message d'activation ;
3) d'activer un fichier SDP (Session Description Protocol) afin de formaliser une validité ;
4) d'activer une sonnerie d'un terminal mobile comme un message d'alerte nationale (la lecture du flux audio via le DVB-H ou la réception d'un fichier étant démarrée après décrochage du terminal mobile) ;
5) de déclencher un avertissement ou rappel par un effet visuel/auditif qu'une émission radio préférée commence ;
6) de piloter une application embarquée dans un terminal qui ouvrira de multiples sessions supplémentaires afin de recevoir les messages/protocoles permettant de piloter une ou plusieurs autres applications, si bien sûr cette application est disponible dans le terminal ou si celle-ci peut être téléchargée/ou pré-chargée.

Dans ce qui suit, on entendra par terminal mobile tout équipement émetteur récepteur portatif, susceptible de fonctionner sur un réseau transporteur, par exemple de radiotéléphonie mobile tel que GSM, GPRS, UMTS et tout type de réseau analogue, par exemple WLAN. Les réseaux de télécommunications permettent actuellement de fournir des services de large diffusion vers les terminaux mobiles qui sont dotés d'une interface MMI (MultiMedia Interface).

L'invention s'applique avantageusement à la fourniture en temps réel de services interactifs via un réseau de télécommunications de type IP (supportant le protocole IP, Internet Protocol, dont on peut trouver la spécification dans les RFC Request For Comments maintenu par l'IETF Internet Engineering Task Force sous le numéro 791).

La découverte des services DVB offerts par un réseau est normalisée dans le cadre d'un réseau de type diffusion par satellite, câble ou numérique terrestre. Cette norme est décrite dans le document Digital Video Broadcasting (DVB) ; Specification for Service Information (SI) in DVB Systems publié par l'ETSI (European Telecomunication Standard Institute) sous le numéro ETSI EN 300 468. Ce document décrit un ensemble de tables contenant des informations sur le réseau, sur les fréquences auxquelles sont transmis les flux de données contenant les services, sur les services proposés etc. Ces tables sont multiplexées dans les flux de données, le terminal étant configuré avec les données nécessaires pour se connecter à un premier flux lui permettant de recevoir ces tables et de construire, d'après leur contenu, une base de donnée contenant la description des services offerts par le réseau et les données de connexion nécessaires à leur réception.

### ARRIERE-PLAN TECHNOLOGIQUE DE L'INVENTION

Les technologies d'émission numérique, telles que la diffusion vidéo numérique - terrestre DVB-T (Digital Video Broadcasting - Terrestrial) pour l'Europe et la diffusion numérique de services intégrés (Integrated Services Digital Broadcasting - Terrestrial) pour le Japon, ont fait entrer la diffusion TV dans l'âge numérique. Le développement du réseau Internet, et surtout la généralisation des accès à haut débit, offrent en effet la possibilité technique de diffuser des services audio et vidéo sur ce réseau à destination de terminaux. La norme émergente DVB-H (Digital Video Broadcasting - Handheld) correspond à une étape supplémentaire par rapport à la norme DVB-T, en rendant possible la réception de la radiodiffusion numérique par des terminaux mobiles.

Les normes DVB-T et DVB-H spécifient un mode de stockage et de diffusion des signaux audio et vidéo sous la forme de séries de bits 0 et 1 plutôt que sous la forme d'une onde à variation continue traditionnellement utilisée pour la diffusion de signaux de télévision analogiques, ce qui permet de diminuer la bande de fréquence nécessaire pour la diffusion d'un programme TV. Dans la norme DVB-H, la principale extension par rapport au standard DVB-T est l'utilisation de la technologie "Time Slicing" (découpage de temps). Afin de rendre plus longue la durée de vie de batterie pour les terminaux mobiles, le signal est reçu dans des bursts (transferts par blocs). Chaque burst est mis en tampon et joué en différé sur une plus longue période. Entre les bursts, le récepteur du terminal mobile peut être arrêté, ce qui a pour résultat une considérable économie de puissance. La technologie DVB-H est utilisée comme support de services IPDC (Internet Protocol Data Casting) pour diffuser des données IP. La combinaison de la technologie de transmission radio DVB-H avec le protocole IP permet de diffuser n'importe quel contenu numérique sous la forme de paquets de données IP. La diffusion de services IPDC offre donc l'avantage que tous les contenus numériques de type IP tels que les flux vidéo, les pages web, les fichiers de musique peuvent être distribués vers des terminaux mobiles.

Afin de permettre l'interprétation des paquets de données reçues en services IPDC, les terminaux mobiles sont conventionnellement dotés d'un guide de service ESG (Electronic Service Guide). Ce guide de service est mis à jour à l'aide de données ESG transmises via le réseau IPDC au terminal mobile. Ce dernier utilise le guide ESG mis à jour pour accéder et consommer les services diffusés.

De façon connue sur le réseau Internet, l'information hypermédia est présentée sous la forme de langage HTML (HypertText Markup Language) et de langage XML (eXtensible Markup Language) utilisant des balises pour former des documents structurés accessibles sur le réseau. Ces documents structurés peuvent être recherchés et lus à l'aide d'un logiciel appelé navigateur installé sur un terminal. Le langage WML (Wireless Markup Language) permet de présenter des portions de tels documents structurés à des terminaux mobiles via un réseau cellulaire. Ce langage WML fait partie du protocole de transmission par paquets WAP.

Les terminaux mobiles, supportant un protocole de transmission par paquets de type WAP et dotés d'un circuit permettant le traitement des signaux numériques de TV, permettent à l'utilisateur de visualiser un programme diffusé tout en naviguant sur des pages WAP du réseau Internet. En effet, des informations sous forme de page HTML ou autre langage de balisage similaire peuvent être transmises via un réseau de type DVB. Le navigateur d'un terminal mobile permet de lire et traiter les pages de type HTML, et d'afficher sur un écran du terminal mobile les pages de type HTML, qu'on appellera dans ce qui suit pages WAP.

Il est connu par les documents GB 2 407 738 et US 2005/273833 des serveurs proposant des services visant à personnaliser le type de diffusion d'un programme transmis selon la norme DVB-H. Cependant, ces services de personnalisation ne peuvent pas être offerts en même temps que la diffusion en continu du programme TV. Par ailleurs, les pages WAP ne peuvent être personnalisées qu'indépendamment de la diffusion du programme.

Lors de la diffusion de programmes TV vers de tels terminaux mobiles, un problème se pose pour les fournisseurs de services qui ne disposent d'aucun moyen de contrôler l'interface MMI de navigation pour tenir compte du programme diffusé. Plus généralement, la diffusion des contenus vers un terminal mobile selon la norme DVB-H n'a pas d'effet interactif avec l'utilisateur et ne permet pas de déclencher des actions spécifiques du terminal.

Un système hybride tel que suggéré dans le document Rauch et al : « Hybrid Mobile Interactive Services combining DVB-T and GPRS », Proceedings of European Personal and Mobile Communications Conference, 19 février 2001, utilise deux voies parallèle de communication : le GPRS et le DVB-T. Ce type de système est peu adapté aux problématiques de mobilité et ne permet pas au diffuseur du programme d'initier simplement une interaction avec l'utilisateur. En cas de décalage ou autre défaillance de la voie de communication parallèle, l'interactivité est aussitôt perdue.

### DESCRIPTION GENERALE DE L'INVENTION

La présente invention a donc pour objet de supprimer un ou plusieurs des inconvénients de l'art antérieur en définissant, pour le protocole IPDC, une méthode de gestion du comportement d'une application permettant une adaptation dynamique du comportement d'une application en fonction de l'évolution de programmes reçus par le terminal mobile.

Un objet supplémentaire de l'invention est de pouvoir limiter de façon simple la navigation des utilisateurs sur une page WAP lors de la diffusion d'un programme TV ou analogue reçu selon la technologie DVB-H. A titre d'illustration, il n'est pas viable d'un point de vue marketing de diffuser sur un écran d'un terminal une publicité pour les produits/services d'une première société si l'utilisateur de ce terminal peut en même temps visiter une page WAP d'une seconde société qui est le concurrent principal de la première société. Or ce type de scénario peut se produire puisque les terminaux peuvent à la fois recevoir un flux de données « broadcasté » en DVB-H et communiquer avec un réseau de radiotéléphonie. Il existe ainsi un besoin de ne plus rendre la navigation sur des pages WAP complètement indépendante de la diffusion d'un programme sur un même terminal mobile.

A cet effet, l'invention concerne selon la revendication 1.

Ainsi de manière avantageuse, l'invention fournit la capacité à des fournisseurs de services de définir des règles comportementales applicables au niveau du terminal mobile pendant le temps de la diffusion d'un programme. Comme l'information additionnelle est insérée parmi les données du flux audio/vidéo, le comportement est directement associé au programme TV et peut être déclenché au début, à la fin, voire au cours du programme associé.

Dans la méthode selon l'invention, les données substantielles de comportement se rapportant au contenu multimédia peuvent être formatées dans des paquets RTP et encapsulées via un en-tête UDP puis un en-tête IP pour être transmises. Le paquet RTP peut être une charge utile d'un paquet UDP, incluant un en-tête RTP et une charge utile RTP stockant les données de comportement se rapportant au contenu multimédia.

Un autre objet de l'invention est de supprimer un ou plusieurs des inconvénients de l'art antérieur en définissant un terminal mobile permettant d'activer des comportements de façon dynamique et synchronisée avec la réception d'un programme émis selon le standard DVB-H.

A cet effet, l'invention propose un terminal mobile selon la revendication 22 et un procédé selon la revendication 26.

Un autre objet de l'invention est de supprimer un ou plusieurs des inconvénients de l'art antérieur en définissant un serveur délivrant à la fois un programme TV selon le standard DVB-H et des informations comportementales pour déclencher de façon dynamique et interactive un comportement d'au moins une application dans le terminal mobile destinataire. La mise en cascade des applications permettra de filtrer et d'interpréter un plus grand nombre de messages de comportements.

A cet effet, l'invention propose un serveur fournisseur de service IPDC selon la revendication 25.

L'invention, avec ses caractéristiques et avantages, ressortira plus clairement à la lecture de la description faite en référence aux dessins annexés dans lesquels :
- la figure 1 représente un mode de réalisation du mécanisme de livraison d'une information comportementale pour activer de manière spécifique et dynamique une application dans un terminal mobile ;
- la figure 2 représente un schéma de l'encapsulation IP / DVB-H ;
- la figure 3 représente schématiquement la décapsulation DVB-H / IP des paquets reçus par des moyens de réception IPDC d'un terminal mobile ;
- la figure 4 montre schématiquement les couches protocolaires utilisées dans la méthode de l'invention ;
- la figure 5 représente un logigramme des étapes du processus dans un mode de réalisation de l'invention ;
- la figure 6 montre schématiquement le mécanisme de livraison d'une information comportementale servant à déclencher de manière spécifique une application dans un terminal mobile.

### DESCRIPTION DES MODES DE REALISATION PREFERES DE L'INVENTION

La méthode selon l'invention utilise, au sein de la technologie DVB-H, un port utilisant le protocole UDP (User Datagram Protocol) spécifique pour différencier le contenu d'un programme diffusé sur un terminal mobile (10) et permettre la gestion du comportement d'une application sur le même terminal mobile. Le protocole UDP est un protocole non orienté connexion de la couche de transport du modèle TCP/IP (Transmission Control Protocol/Internet Protocol). Ce protocole UDP est très simple étant donné qu'il ne fournit pas de contrôle d'erreurs (il n'est pas orienté connexion). Ce protocole est utilisé ici afin de différencier plusieurs services au sein de la même adresse IP.

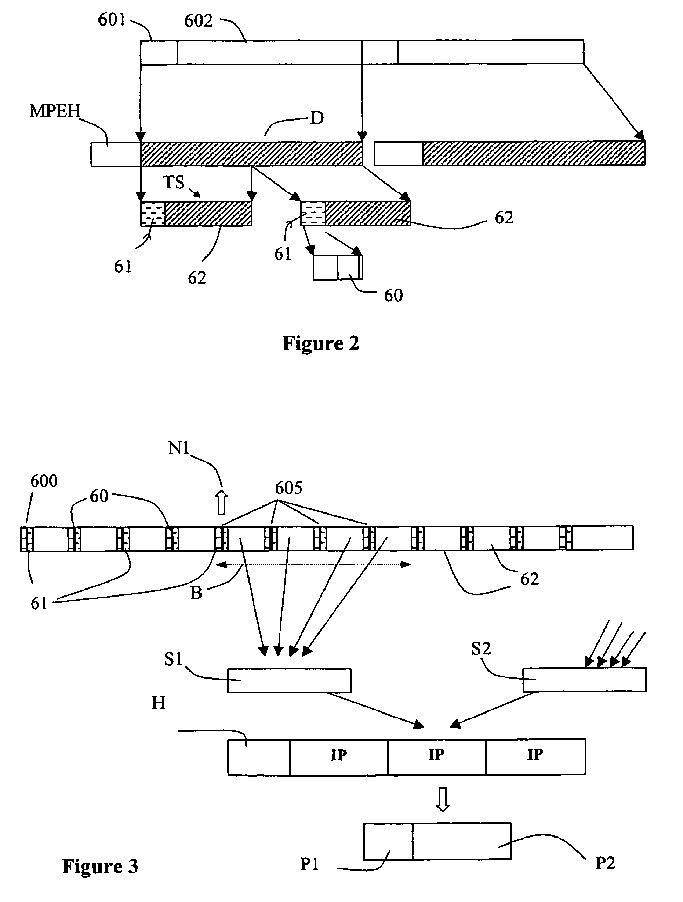

Dans la couche de transport utilisée dans un service DVB-H, on a par exemple des paquets MPEG2-TS (61, 62) de 188 octets, comme illustré à la figure 2. L'ensemble de la transmission de ces paquets (61, 62) est cadencée à la même fréquence. Au début de chacun de ces paquets (61, 62) se trouve une en-tête MPEG2 (61) incluant un indicateur (60) de paquet PID (Packet IDentifier) qui permet au récepteur d'un terminal mobile (10) de savoir ce qu'il faut faire d'un paquet et permettre ainsi l'interprétation du train de transport TS (Transport Stream). Un indicateur PID permet d'identifier un canal logique (on entend par canal logique l'ensembles des paquets MPEG-2 TS partageant le même PID sur un multiplex donné ; ces paquets constituent un même programme). Associé aux systèmes des tables d'informations, il permet de repérer les différents flux, et d'indiquer aux décodeurs sur quels canaux récupérer les programmes.

Il faut rappeler ici qu'il existe dans la norme mpeg2-TS plusieurs types d'indicateurs PIDs utilisés par les récepteurs classiques. L'indicateur VPID est le PID du flux vidéo, l'indicateur APID est celui du flux audio. De temps en temps, un indicateur PID PCR (Program Clock Reference) est utilisé pour synchroniser les paquets vidéo et audio ; cependant la plus part du temps cette information est incluse dans le flux vidéo. Le quatrième indicateur PID est utilisé pour les données comme le guide des programmes ou comme les informations sur les autres fréquences qui composent le bouquet complet, etc. Ce type de données est appelé le « System Information » et utilise des valeurs de PID entre 0000 et 0014 (notation hexadécimale).

La première partie du train « System Information » est appelée la PAT (Program Association Table). Cette partie est transmise dans le PID 0000 et contient la liste des PMTs (Program Map Tables) qui font partie du flux de données. Par exemple, de façon classique en DVB :
PAT (PID 0000) = 0100, 0200, 0300, 0400
PMT 1 (PID 0100) = vidéo PID 0101, Audio PID 0102, Audio PID 0103, PCR 01 FF
PMT 2 (PID 0200) = vidéo PID 0201, Audio PID 0202, PCR 02FF
PMT 3 (PID 0300) = vidéo PID 0301, Audio PID 0302, PCR 03FF
PMT 4 (PID 0400) = vidéo PID 0401, Audio PID 0302, PCR 0401

Dans l'approche DVB-H, ces tables permettent ainsi de spécifier un ou plusieurs indicateurs PID correspondant chacun à une adresse IP ou un groupe d'adresses IP. Les tables PMT à sélectionner sont renseignées via les adresses IP disponibles dans la table INT, qui est elle-même référencée par la table NIT ou la BAT. Dans l'exemple ci-dessus, avec ces informations, le terminal (10) sait que le train transport sur la fréquence courante contient 4 programmes. Le premier canal contient deux services audio (peut être pour plusieurs langues) et les 3 premiers canaux contiennent l'information de synchronisation séparée - le quatrième a son PCR inclus dans son flux vidéo.

En référence à la figure 3, les indicateurs de paquet PIDs (60) permettent de spécifier au terminal mobile (10) certaines informations utiles sur les trains de données, lui permettant par exemple d'écrire les informations correctes dans son guide des programmes. Les tables de signalisation pouvant être identifiées grâce à ces indicateurs (60) sont les suivantes :
- PAT (Program Association Table) ;
- PMT (Program Map Table) ;
- INT (IP Notification Table) ;
- NIT (Network Information Table).

L'information correspondant à la table PAT est transmise dans le PID 0000 (600) et contient la liste des tables PMTs qui font partie du flux de données. Autrement dit, la table PAT contient la liste complète de tous les programmes qui sont au sein du flux TS. Pour chaque multiplex (à une fréquence donnée), cette table PAT permet de retrouver les tables PMT.

Un abonnement peut être souscrit par l'utilisateur pour le terminal mobile (10) de façon à ce qu'une table PAT soit fournie au terminal (10) par un opérateur IPDC, via un serveur fournisseur de flux. Lorsque les moyens (15) de réception IPDC du terminal mobile (10) réceptionnent les paquets (61, 62) de la couche de transport, ils réalisent lors d'une première étape de lecture du premier indicateur PID 0000 une interprétation de la table PAT d'association de programme. Les moyens (15) de réception IPDC lisent les 188 octets d'un paquet et assurent le découpage du premier paquet MPEG2-TS. L'indicateur PID 0000 lu est mémorisé et interprété, de façon à ce que les moyens (15) de réception IPDC sélectionnent certains des indicateurs suivants (60) pour dresser une liste des indicateurs PIDs correspondant à la table PMT stipulant l'emplacement, parmi les paquets reçus (61, 62), des programmes accessibles.

Naturellement, les moyens (15) de réception IPDC doivent être compris comme des moyens de réception permettant de recevoir la TV mobile, adaptés à un mode de transmission logiciel basé sur la technologie IP DataCast. Comme l'appréciera l'homme du métier, il suffit de rappeler que le principe de base de la technologie IPDC est de transmettre des informations en mode broadcasting et que pour l'encapsulation, la trame IP contenant l'information est insérée dans une trame DVB-H qui est composée du protocole MPE (MultiProtocol Encapsulation), du protocole de correction d'erreur (FEC) et du protocole de contrôle de transmission (Time Slicing). Trois services sont généralement définis pour cet usage : il s'agit de la sélection d'une information (vidéoclip, nouvelles, audioclip, etc.), la réception en direct d'une ou de plusieurs chaînes de télévision et la réception d'un ou de plusieurs fichiers.

Pour permettre une décapsulation des données, les moyens (15) de réception IPDC du terminal mobile (10) effectuent dans une deuxième étape la lecture de la première table PMT pour récupérer les éléments d'information nécessaire permettant de trouver le premier programme (programme auquel l'utilisateur du terminal mobile s'est abonné). Et une fois que la première table PMT est trouvée (via la liste des PIDs sélectionnés), il est possible d'identifier le programme, lors d'une troisième étape. Pour cela, des numéros (N1) d'indicateurs PIDs sont identifiés. Les indicateurs PIDs (605) qui correspondent aux paquets (62) porteurs du programme à diffuser sur le terminal mobile (10) sont identifiés et les paquets de données correspondants (62) sont récupérés pour former une section (S1) dans une phase de décapsulation, comme illustré à la figure 3.

Il s'agit en effet de récupérer, dans une quatrième étape, les paquets (62) transportant le flux vidéo correspondant au programme identifié d'une part, et les paquets (62) transportant le flux audio pour ce programme d'autre part. Les indicateurs PIDs (60) portent une numérotation qui permet le repérage des flux respectifs à extraire du train de transport TS. Comme les paquets (62) de 188 octets récupérés sont trop courts, c'est l'association de plusieurs paquets qui va définir une section (S1, respectivement S2). Selon l'invention les paquets (62) incluent non seulement la combinaison d'informations vidéo compressées et d'informations audio, mais également une information additionnelle (3) comprenant un descriptif de comportement, permettant de déclencher un événement interactif via des applications (A1, A2) stockées dans la mémoire (13) du terminal mobile (10).

La table PAT peut correspondre à plusieurs sections, si par exemple la liste de programmes est longue et la section va définir un moyen de "parser cette table (par reconnaissance d'unités syntaxiques). Plusieurs sections équivalentes vont être associées/assemblées et récupérées, dans la quatrième étape, par des mémoires tampons respectives pour récupérer les données audio, vidéo et IP.

La table INT est utilisée dans la norme DVB-H pour signaliser le flux IP et spécifier tous les indicateurs PIDs (60) correspondant à une adresse IP ou un groupe d'adresses IP, via la numérotation de ces indicateurs PIDs (60). Il est donc possible dans la méthode selon l'invention, grâce à cette table INT, de récupérer également les données IP contenant ladite information additionnelle (3), dans au moins une mémoire tampon déterminée (buffer IP) du terminal (10). Une ou plusieurs sections peuvent être spécifiquement dédiées à la récupération du flux IP, en complément des sections (S1, S2) servant à récupérer le flux vidéo et des sections servant à récupérer le flux audio.

En référence à la figure 2, l'encapsulation des datagrammes IP (601, 602) à en-tête IP (601) se fait dans des paquets MPE (MultiProtocol Encapsulation). L'utilisation du protocole MPE permet de diffuser dans un canal DVB-H non seulement des contenus classiques MPEG-2 TS (pour diffuser des programmes de télévision par exemple) mais aussi du format IP. Le protocole MPE, recommandé par la norme DVB, assure l'encapsulation de données génériques dans les paquets MPEG-2 TS en utilisant la norme DSM-CC (Digital Storage Media - Command and Control). Comme illustré à la figure 2, un en-tête (MPEH) est prévu pour l'encapsulation MPE des différentes sections de données (D) à diffuser selon la norme DVB-H. Lors de la décapsulation sélective consistant à récupérer un programme auquel l'utilisateur s'est abonné, les sections reconstituées (S1, S2) sont rassemblées dans des paquets MPE de grande taille (par exemple jusqu'à 2 Mb), comme illustré à la figure 3. L'utilisation de la technologie "Time Slicing" (découpage de temps) permet de mettre chaque burst (B) dans des tampons et de faire lire les données en différé sur une plus longue période. Entre les bursts (B) correspondant aux données du programme à récupérer, le récepteur du terminal mobile (10) peut être arrêté, ce qui a pour résultat une considérable économie de puissance.

Les moyens (15) de réception IPDC du terminal (10) utilisent les entêtes (H) des paquets MPE pour récupérer les données IP et les router sélectivement soit vers un lecteur audio/vidéo pour les données contenant le flux audio, respectivement le flux vidéo, soit vers des briques logicielles pour les données contenant l'information additionnelle (3) servant à déclencher un événement interactif.

Les paquets IP qui nous intéressent ici sont regroupés avec un en-tête MPE (H) contenant des données encapsulées selon le protocole UDP (User Datagramm protocol). Avec ce protocole UDP, on utilise aussi du protocole RTP (Real Time Protocol) rassemblant notamment des données audio et vidéo qu'on va fournir au lecteur. Le protocole RTP permet de transporter des données qui ont des propriétés temps-réel. Le protocole UDP est employé ici pour supporter la technologie « multicasting » (plusieurs clients). Dans le procédé de l'invention, la transmission DVB-H est unidirectionnelle et l'utilisation du protocole UDP permet de faciliter le filtrage. Ainsi, il peut convenir à la transmission du contenu multimedia en temps réel. Les données substantielles de comportement se rapportant au contenu multimédia peuvent être formatées dans des paquets RTP et encapsulées via un en-tête UDP puis un en-tête IP pour être transmises. Comme représenté à l'annexe IV, le paquet RTP peut être une charge utile d'un paquet UDP, incluant une en-tête RTP et une charge utile RTP stockant les données de comportement se rapportant au contenu multimédia.

L'en-tête RTP peut inclure une version V du protocole RTP, une prolongation X, un remplissage P, un compte CC de CSRC, un marqueur M définissant un profil, un type de charge utile PT définissant un type et une caractéristique des données de multimédia stockées dans la charge utile RTP, un comportement, un numéro de programme auquel est associé le comportement, un nombre de séquence, une information temporelle « timestamp » indiquant un point de transmission, un numéro de synchronisation SSRC, et une source de contribution CSRC. La prolongation X peut être employée pour prolonger l'information d'en-tête RTP. Par exemple, quand la prolongation X est placée à "1", il peut y avoir une prolongation d'en-tête. A la différence de la diffusion conventionnelle de programmes TV par « streaming », il est possible avec le procédé de l'invention de recevoir des données IP diffusées via le canal DVB-H avec des adresses multicast (adresses du type 239.255.25.12).

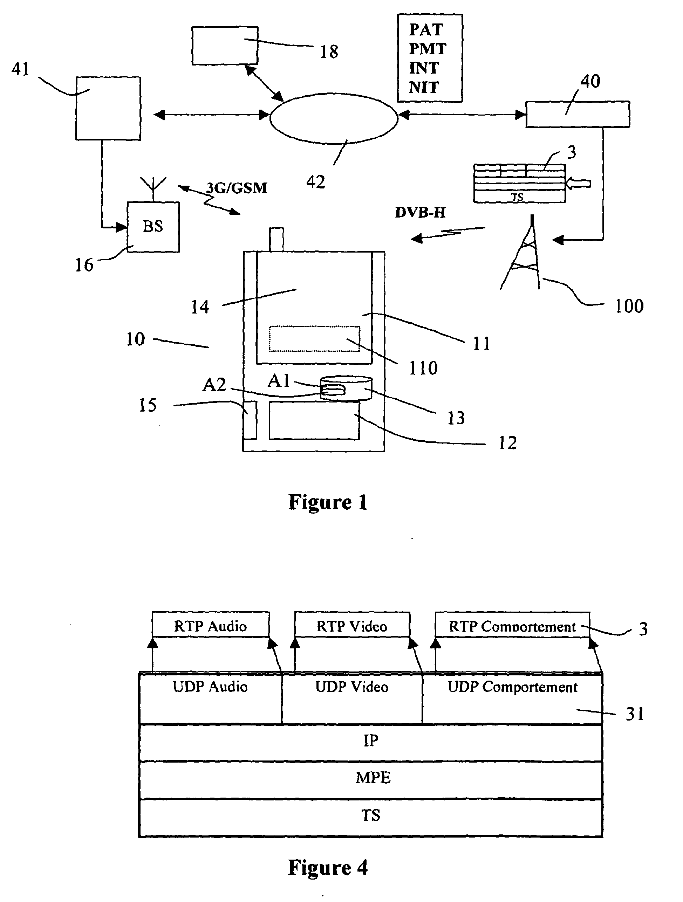

Le format des paquets (P1, P2) permet une interprétation correcte par les moyens (15, Fig. 1) de réception IPDC du terminal (10). En effet, les paquets RTP disposent d'une information temporelle « timestamp », pour permettre leur corrélation. Cette information temporelle s'inscrit automatiquement sur les paquets pour attester l'instant d'exécution ou d'apparition d'un événement. Le flux d'images vidéo peut être ainsi synchronisé avec le flux audio et ladite information additionnelle (3) peut produire un évènement interactif en correspondance avec le début, la fin d'un programme, et/ou un évènement particulier au cours d'un programme. L'intérêt d'utiliser le protocole RTP réside notamment dans le fait que l'interprétation par le moyen lecteur décodeur du terminal (10) est facilitée grâce à la présence d'unités d'accès (Access Units) permettant d'optimiser le décodage d'images et de sons de façon synchronisée, en prenant en compte l'évolution des images. Par exemple, le fait qu'il y ait changement complet de plan ou au contraire une image fixe est connu et le décodage des données s'adapte à l'évolution des images. Les recommandations RFC 3550 ou RFC 3551 par exemple exposent la façon de gérer le protocole RTP.

Dans un mode de réalisation de l'invention, en plus de diffuser un contenu audio et vidéo, le fournisseur de contenu rajoute un port utilisant un protocole de type UDP pour transporter des paquets de type RTP qui définissent par exemple le début ou la fin d'un comportement. Ainsi, comme représenté à l'annexe I, l'information UDP de premier comportement est associée au port 9806 qui se trouve à l'adresse IP = FF1500 :0 :0 :0 :0 :7502. Les seconds et troisièmes comportements sont également associés à d'autres ports. Ce comportement peut consister en une action, une restriction d'accès à un service ou au contraire l'activation d'un service. La méthode selon l'invention prévoit une interprétation de l'information temporelle « timestamp » attribuée aux paquets de données audio et vidéo pour donner par exemple soit un aspect interactif, soit restrictif à une application.

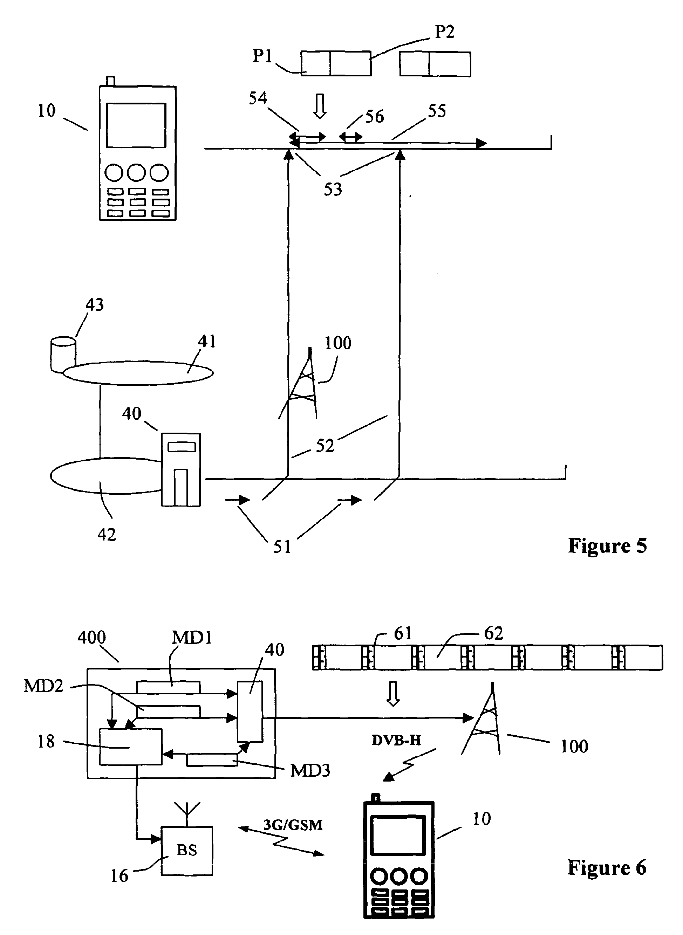

La méthode selon l'invention vise à gérer le comportement d'une application interactive dans le terminal mobile (10) lors de la diffusion sur le canal DVB-H d'au moins un programme TV/radio déterminé provenant d'un serveur fournisseur de service IPDC (40). La gestion de comportement comme expliqué ci-dessus peut avoir une multitude de fonctionnalité comme : Start/stop d'une application, open, close, set, unset, place, unplace, load, unload, ban, unban, muteOn, muteOff, ScreenOn, ScreenOff. En référence aux figures 1 et 5, une étape (51) d'encapsulation de données selon un protocole de type UDP et RTP est réalisée par ledit serveur (40) pour que l'émission DVB-H puisse fournir en complément du ou des programmes TV, un descriptif de comportement à adopter et des données permettant de synchroniser le déclenchement du comportement par rapport à la réception des données codées audio et vidéo du programme TV à visualiser sur l'écran (11). La figure 4 montre un port UDP (31) que l'on peut appeler « UDP comportemental », lequel transmet des paquets selon le protocole RTP contenant les informations comportementales à interpréter par le terminal mobile (10) et étiquetés « RTP comportemental ». La transmission entre le serveur (40) et le terminal mobile (10) des données encapsulées lors de ladite étape (51) d'encapsulation utilise des couches protocolaires incluant une couche RTP, une couche UDP, une couche IP, une couche MPE et une couche TS. La trame de paquets de transport (61, 62) est envoyée vers le terminal mobile (10) à travers un canal DVB-H via une transmission radio unidirectionnelle. Une antenne (100) de transmission DVB-H est reliée pour cela au serveur fournisseur de service IPDC (40).

Ce serveur (40) comporte des moyens de fourniture de services avec découpage en temps « time-slicing » et plus particulièrement un encapsulateur de type IP agencé pour :
- encapsuler des paquets RTP/RTCP ;
- utiliser au moins un paquet RTP/RTCP supplémentaire prévu pour juxtaposer et corréler des paquets RTP contenant des données codées audio et vidéo avec au moins une information (3) incluant un descriptif de comportement ; et
- associer un port de type UDP (P1) à ladite information (3).

Etant donné que les paquets IP de l'application comportementale ne sont pas broadcastés de façon intensive, le RTP comportemental peut être associé à un port RTCP de synchronisation. Il est nécessaire d'avoir une horloge. Le RTCP transporte le NTP et permet la synchronisation entre plusieurs RTP. Autrement dit, les paquets RTP récupérés (P1, P2) peuvent être synchronisés avec d'autres paquets RTP (vidéo et audio). Cette technique de synchronisation RTCP s'apparente à celle utilisée pour synchroniser des sources audio différentes (par exemple Anglais, Français, Espagnol) avec un flux vidéo unique. L'utilisateur choisit alors une langue disponible et le lecteur ne sélectionne et ne décode que les paquets RTP de ce port. Contrairement aux paquets RTP classiques, le « RTP comportemental » possède un champ « payload » de données utiles vide ou allégé afin de ne pas consommer de la bande passante. Pour la synchronisation, le service doit être actif au même moment de disponibilité que le programme à diffuser que l'on souhaite définir avec ledit comportement. Il doit donc être vu par la couche de transport et par la méthode de décodage comme un service, c'est à dire comme une langue ou un sous-titrage. De plus, le choix de la couche RTP pour ajouter un tel service n'entrave en rien le comportement des terminaux mobiles (10) qui ne sont pas compatibles avec cette technique. Les ports UDP non connus ou non traités sont ignorés (pas de traitement sur ces sockets).

L'étape (51) d'encapsulation permet d'insérer, dans des paquets de type UDP et RTP (P1, respectivement P2) contenant des données codées audio et vidéo correspondant au programme TV, une information (3) incluant le descriptif de comportement. Un port de type UDP (31) est alors associé à ladite information (3), par exemple soit sous la forme d'adresses interdites, soit sous la forme de méthode exécutée par l'appliquette adéquate. L'insertion du numéro de comportement peut être effectuée, comme illustré à l'annexe IV, dans le champ habituellement alloué au numéro de séquence de l'en-tête RTP (voir annexe III). Alternativement, l'insertion du numéro de comportement peut être effectuée, comme illustré à l'annexe V, dans le champ RTP payload. Le numéro du service permet d'identifier dans le guide des programmes le service ayant un changement de comportement. Dans un mode de réalisation, le numéro du fournisseur d'applicatifs permet d'identifier dans une liste l'appliquette ou l'exécutable du fournisseur à utiliser et pour finir, le numéro du comportement indique à l'exécutable quel comportement le terminal mobile (10) doit avoir. Le numéro du fournisseur peut comporter une indication de la provenance du comportement et du numéro de programme(s) au(x)quel(s) ce/ces comportements sont liés. Le Start/stop SS indique au lecteur si l'applicatif est déjà en fonctionnement. Car en mode de diffusion broadcast, il est possible de rater certaines informations, l'exécutable ou l'appliquette doit savoir s'il est nécessaire d'interpréter ou non l'information. Il est peut être trop tard. Autrement dit, il vaut mieux insérer un indicateur qui permet d'identifier si une application est en cours de diffusion.

Le serveur (40) fournisseur de flux peut spécifier une méthode à déclencher lors de la diffusion de l'événement ou information (3) via le canal DVB-H. La méthode spécifiée dans le champ RTP comportemental pourra permettre de lancer par exemple une appliquette Java, en indiquant les paramètres d'entrée et de sortie d'un modèle de données et de méthode disponible dans l'ESG. Le guide ESG permet de lister les méthodes de service et d'adresser ces méthodes en fonction des événements ou informations (3) reçues par une diffusion DVB-H.

La méthode peut seulement spécifier la façon dont l'appliquette de type interactif doit déclencher un affichage à l'écran (14) et assurer une réponse à l'information (3) de comportement par l'activation d'une tâche comme par exemple l'envoi d'un SMS ou d'un MMS (Multimedia Messaging Services). Avec ce type de fonctionnalité, l'interactivité proposée permet de faire gagner du temps à l'utilisateur qui veut réagir à un programme, la fenêtre dédiée à l'envoi d'un SMS ou MMS étant par exemple automatiquement affichée sur la seconde zone (110) de l'écran du terminal (10). On comprend que ce type de fonctionnalité est très flexible puisque les fournisseurs de service, les opérateurs ou les diffuseurs pourront aisément changer une partie des méthodes du guide ESG à partir dudit guide ESG et remplacer des fichiers d'archive Java, des meta-données au format XML, des images ou fichiers associés, ou tout autre format compréhensible et exécutable par un terminal mobile (10). L'exemple illustré pour une méthode SMS dans l'annexe VI permet d'implémenter une réponse rapide par SMS, déclenchée via un lien prévu dans le guide ESG.

L'identité du service « service_id » fait avec une identification du programme « program_id » la référence à une information de programme et spécifie des numéros SMS devant être utilisés. Les attributs A1, A2, A3 et A4 représentent chacun une forme textuelle de réponse à envoyer vers un opérateur en utilisant le numéro de SMS « SMS_number ». Les attributs G1, G2, G3 et G4 représentent chacun une forme graphique de réponse à tracer éventuellement sur l'écran (14) du terminal (10). Enfin, l'attribut bgd représente l'arrière-plan à tracer éventuellement sur l'écran (14). Une représentation de cette invention est de suggérer au terminal un mode de visualisation ou encore de lui indiquer ou trouver le mode de visualisation (LASeR), selon le programme visualisé (TV/Radio/Show/série/Film) via la réception de ces messages interactifs.

Comme illustré à la figure 5, le serveur fournisseur de service IPDC (40) transmet au terminal mobile (10), lors d'une étape (52) d'envoi de données via un canal DVB-H, au moins une trame de paquets de transport incluant les données encapsulées lors de l'étape (51) d'encapsulation. Un récepteur DVB-H du terminal mobile (10) réceptionne la trame de paquets de transport (61, 62) lors d'une étape (53) de réception des données ainsi envoyées.

La méthode comprend une étape (54) de détection utilisant les moyens (15) de réception IPDC du terminal mobile (10) pour détecter le port de type UDP associé à l'information (3) qui contient le descriptif de comportement. Dès la réception de la trame de paquets de transport (61, 62) le lecteur décodeur du terminal mobile (10) effectue la lecture des données codées audio et vidéo correspondant au programme TV auquel l'utilisateur s'est abonné. Cette étape (55) de lecture se fait par intermittence sur les bursts (B) indiqués par la table PAT pour permettre la récupération du programme TV sans consommer excessivement les ressources en énergie du terminal mobile (10). On comprend que l'étape (54) de détection du port UDP porteur du descriptif de comportement s'opère au cours de l'étape de lecture et décapsulation des paquets (61, 62). Tandis que la lecture des données codées audio vidéo déclenche un affichage du programme TV dans une zone (14) au moins de l'écran (11) du terminal mobile (10), une étape (56) d'interprétation du descriptif de comportement est réalisée sur le terminal consécutivement à la détection du port UDP (31) transportant les paquets RTP (P2) qui définissent notamment le début ou la fin du comportement. Cette étape (56) d'interprétation permet de déclencher un comportement déterminé d'une ou plusieurs applications interactives (A1, A2) stockées dans des moyens de mémorisation (13) du terminal mobile (10).

Le terminal (10) utilise des moyens de lecture de l'ESG et consulte ainsi une liste des applicatifs. Une ou plusieurs sélections des applicatifs s'effectue automatiquement si le paramètre interactif est en mode actif « ON ». La liste des applicatifs permet d'activer les filtres IP en sélectionnant les adresses IP et les ports UDP nécessaires au fonctionnement de l'applicatif. Le guide ESG peut faire référence à une application en fonction de l'heure, de la chaîne de télévision, et du type de terminal.

On comprend que le procédé selon l'invention, grâce à l'étape (52) d'envoi de l' information (3) incluant le descriptif de comportement encapsulé sur un port de type UDP (P1), dans les paquets de transport, permet de déclencher des comportements au niveau du terminal (10). Ainsi, l'étape (56) d'interprétation de ladite information permet par exemple de limiter la navigation sur une page WAP lors de la diffusion d'un programme TV ou analogue correspondant aux paquets reçus par le terminal (10) selon la technologie DVB-H. Alternativement ou de façon additionnelle, cette étape (56) d'interprétation peut permettre au préalable le chargement d'une page WAP lors de la diffusion d'un tel programme avant son affichage sur l'écran (14) du terminal (10).

Le procédé selon l'invention permet également de limiter le temps d'ouverture de cette même page WAP en envoyant un premier message de chargement mémoire tampon pour faciliter la réception du message d'activation. Une interprétation spécifique de préchargement d'une application est donc réalisée, avant l'exécution de cette application, en fonction d'un événement. Il est aussi permis d'activer un fichier SDP afin de formaliser une validité. Une sonnerie d'un terminal mobile peut être activée comme un message d'alerte nationale, la lecture du flux audio via le DVB-H ou la réception d'un fichier étant démarrée par exemple après décrochage du terminal mobile. Par ailleurs, le comportement peut se traduire par un avertissement ou rappel par un effet visuel/auditif qui permet de signaler à l'utilisateur qu'une émission radio préférée commence.

La possibilité de déclencher un comportement d'une application (A1, respectivement A2) de façon concomitante avec la diffusion d'un programme déterminé par simple traitement des données envoyées sur le canal DVB-H fournit un effet interactif avec des actions spécifiques du terminal mobile (10).

Du point de vue des fournisseurs de services IPDC, on comprend que l'adjonction de données comportementales peut être utilisée à profit pour par exemple limiter, voire interdire, la navigation vers les sites de concurrents d'une société qui est l'objet du programme en cours de diffusion. Par exemple, il n'est pas viable d'un point de vue marketing de diffuser sur une première zone (14) de l'écran (11) une publicité pour les produits/services d'une première société si l'utilisateur du terminal mobile (10) peut en même temps visiter une page WAP d'une seconde société qui est le concurrent principal de la première société, sur une seconde zone (110) de l'écran (11). Or ce type de scénario est possible puisque les terminaux mobiles (10) peuvent à la fois recevoir un flux de données « broadcasté » en DVB-H et communiquer avec un réseau (41) de radiotéléphonie. Les téléphones portables les plus récents combinent en effet la fonctionnalité « télévision » et la puissance applicative du point à point. Le terminal mobile (10) de la figure 1 peut être doté de moyens d'accès à un portail de service (18) de type WAP via une liaison réseau bidirectionnelle ainsi que de moyens d'autorisation d'accès à un service de type WAP.

La méthode selon l'invention peut proposer aux fournisseurs de service, grâce aux données comportementales, de limiter la navigation par rapport au protocole WAP ou toute autre application. Une ou plusieurs adresses URL (Uniform Resource Locator) peuvent être spécifiées comme non accessibles selon un ou plusieurs comportements fournis avec la livraison du programme sur le canal DVB-H. Un message affiché à l'écran avec la mention « comportement limité » ou mention similaire peut être envoyé à l'utilisateur par SMS. Dans l'exemple de l'annexe 1, l'adresse www.cocacola.com est spécifiée dans un comportement de limitation de la navigation WAP, ce comportement étant déclenché lorsqu'un programme relatif à la société PEPSI est envoyé au terminal mobile (10) pour être affiché sur la zone (14) de l'écran (11). L'application concernée (en l'occurrence une application de navigation) adopte le comportement spécifié de façon temporaire, par exemple pendant le temps de la diffusion du programme. L'implémentation de l'annexe I pour définir des autorisations à des pages WAP n'est qu'un exemple parmi d'autres des possibilités de déclenchement d'une action spécifique au niveau du terminal mobile (10).

Selon l'invention, la méthode de gestion du comportement d'une application permet une identification du port UDP (31) à détecter de façon spécifique, en utilisant un numéro unique au sein d'une adresse IP déterminée. Cette adresse IP est connue par le guide ESG mémorisé dans le terminal mobile (10). Les moyens (15) de réception IPDC comprennent, par exemple, des moyens pour recevoir et interpréter les données indiquant des adresses IP et un numéro de port relatif au programme TV à afficher, en fonction de paramètres d'abonnement relatifs à un service de diffusion DVB-H déterminé. Ces paramètres sont répertoriés dans le guide de service de type ESG. De façon alternative, ce numéro peut être connu par un lien dans un service sur un fichier SDP (Session Description Protocol). Le guide des services ESG (Electronic Service Guide) spécifié par la norme DVB-H se présente sous un format XML, dans lequel on vient baliser un nombre déterminé de services. Ce guide est délivré par le serveur (40) fournisseur de services. Chaque service peut stipuler un emplacement d'un fichier SDP ou le contenu d'un tel fichier SDP à l'intérieur d'un fichier XML. C'est grâce à ce balisage que les moyens (15) de réception IPDC retrouvent les paramètres nécessaires pour sélectionner les bons paquets IP.

On comprend donc que l'insertion de l'information (3, Fig. 1) contenant le descriptif de comportement est précédée d'une étape de désignation du port de type UDP prévu pour ce descriptif comportemental. Ce port est par exemple indiqué sur les fragments XML, par un numéro unique au sein d'une adresse IP connu par le guide ESG, comme montré dans l'annexe I. Une étape de description du port de type UDP peut être prévue et la description est alors formulée avec au moins un fichier de type SDP. L'accès à un fichier SDP se fait via le guide ESG qui se sert d'un descripteur pour "accrocher" le fichier SDP dans une table SI/PSI. Un exemple de fichier SDP est illustré ci-dessous :
V=0
0=- 2073098017 1482761713 IN IP4 10-234-2-13
S=DVBH
C=IN IP4 225.0.001/10
t= 0 0
m=interact 1244 RTP/AVP 100.

De façon alternative, la description du port de type UDP peut aussi être formulée par un guide ESG agencé pour faire référence à au moins un fichier de type SDP. Une formulation de cette description par un guide ESG faisant référence à au moins une syntaxe d'un fichier de type SDP est également une solution pour permettre la prise en compte du port de type UDP.

Le numéro unique permettant l'identification du port UDP (31) à détecter est le lien avec les méthodes présentes dans les fragments (ou métadonnées) XML qui définissent les actions autorisées comme indiqué dans l'annexe VI. Ces fragments définissent donc ledit comportement. Dans un mode de réalisation de l'invention, le comportement peut également faire l'objet d'une interface spécifique si celui-ci est sélectionné. Dans ce cas, des métadonnées au format PCF (Portable Content Format) ou LASeR (LightWeight Application Scene Représentation) peuvent être utilisées pour la définition du comportement afin d'optimiser le portage des interfaces graphiques.

Le port (31) UDP servant à différencier le contenu et déclencher un comportement déterminé pour une application (A1, A2) du terminal (10) doit être décrit pour que l'information (3) incluant le descriptif de comportement soit correctement interprétée. Pour cela, au moins un fichier SDP ou un guide ESG faisant référence à un fichier SDP (ou à sa syntaxe) sont utilisés. L'annexe II montre un exemple de fichier (syntaxe) de type SDP qui fournit une description de la session. Grâce à cette description, les moyens (15) de réception IPDC du terminal mobile (10) peuvent sélectionner l'adresse ou le groupe d'adresses IP qui correspondent au contenu à récupérer. Ainsi dans un burst (B), une sélection pertinente de paquets pourra être récupérée.

Au lieu de restreindre l'interactivité comme vu dans l'exemple de l'annexe 1, on peut également fournir de l'interactivité en activant, lors de l'émission en DVB-H d'un programme TV, l'accès à un portail de service (18) du réseau Internet (42). Le terminal mobile (10) communique pour cela de façon classique avec la station de base (16) du réseau de radio téléphonie (41) et utilise la voie montante pour accéder par exemple à une page WAP. Le réseau de radiotéléphonie (41) peut être du type GSM (Global System for Mobile communications), 3G ou tout autre réseau similaire, par exemple à accès radio CDMA (Code Division Multiple Access).

En référence aux figures 1 et 5, la méthode selon l'invention permet d'identifier et de déclencher un comportement sur les applications (A1, respectivement A2) d'un terminal mobile (10) dans un laps de temps bien précis tout en répondant aux problèmes de timing et de diffusion. L'étape (51) d'encapsulation prévoit l'insertion de données de synchronisation pour permettre aux moyens (15) de réception IPDC du terminal mobile (10) de synchroniser au moins un paquet de type RTP contenant le descriptif de comportement avec des paquets (62) de type RTP contenant les données codées audio et vidéo correspondant au programme TV. L'étape d'interprétation (56) se produit lors de la livraison d'informations sur un canal DVB-H, de sorte que la méthode ou le comportement interactif est déclenché au même moment que l'arrivée d'un événement sur l'écran (11) du terminal mobile (10).

Par ailleurs, il doit être pris en compte qu'une page http ou WAP met un certain temps pour récupérer les informations (des images par exemple). Il serait préjudiciable à une société présentant une publicité que cette dernière soit finie avant d'obtenir la page disponible. La présente invention remédie à ce problème en déclenchant un chargement de la page WAP à afficher avant le démarrage de ladite publicité. Autrement dit, le comportement permettant le chargement de la page WAP est encapsulé dans un premier port UDP qui précède (par exemple au sein d'un même burst) un second port UDP encapsulant une information de déclenchement de l'affichage proprement dit de cette page WAP. Ainsi, le déroulement des événements peut être prévu de la manière suivante : au même moment que l'arrivée d'un événement sur l'écran (11) du terminal mobile (10), par exemple lors du début de la publicité, le terminal affiche simplement la page dont les éléments ont déjà été chargés au préalable.

Le fournisseur de service peut d'une certaine façon initier un dialogue avec l'une au moins des applications (A1 ou A2) stockées dans le terminal mobile (10) par utilisation d'une signalisation en temps réel RTP. L'interprétation de cette signalisation peut être semblable à ce que la recommandation RFC 3550 décrit comme un profil. L'objectif de la méthode est de permettre que des événements significatifs tels que des bordures de trame soient marquées dans le flux de données. L'information additionnelle (3) requise pour réaliser un format permettant la livraison d'informations utiles (payload) particulières, comme le mode d'encodage vidéo, doit être transportée dans la section container « payload » des paquets.

Dans un premier mode de réalisation de l'invention, l'information additionnelle (3) peut consister en une en-tête de type RTP qui est toujours présente au début d'une section « payload » ou en une valeur réservée à indiquer dans la configuration des données. Dans un second mode de réalisation de l'invention, si une classe particulière d'applications requiert un format additionnel de payload fonctionnellement indépendant, le profil sous lequel ces applications sont traitées doit définir des champs fixes additionnels, situés immédiatement après le champ SSRC (Synchronization Source) de l'en-tête existante, comme illustré à l'annexe V. Ces applications seront aptes à accéder rapidement et directement aux champs additionnels, tandis que des systèmes de contrôle indépendants du profil ou des systèmes enregistreurs peuvent encore traiter les paquets RTP en interprétant seulement les 12 premiers octets. De plus, ce second mode de réalisation selon l'annexe V permet de consommer moins de bande passante qu'avec une extension de l'entête RTP, comme montré dans l'annexe IV. Une seule session est ouverte et plusieurs comportements peuvent être spécifiés à partir d'un seul paquet (P1, P2). Le format classique d'une entête RTP est illustré à titre indicatif dans l'annexe III.

L'accès des applications aux champs additionnels peut s'effectuer lorsque la méthode de description est normée ou lorsque le terminal est dotée d'une application propriétaire préalablement chargée via DVB-H ou téléchargée depuis une page WAP ou analogue. Le payload type du RTP peut donner un point d'accès au décodage. Ici, c'est le payload type qui correspond par exemple au numéro propriétaire identifié dans l'ESG qui fera le lien avec une méthode de lecture du paquet RTP et sera envoyé à un applicatif relatif à ce UDP/payload type/chaîne/l'horaire/nom.

Pour les valeurs réservées, dans un mode de réalisation utilisant une communication GSM/GPRS/UMTS, il peut être envisagé de réserver les valeurs respectives 200, 201, 202, 203, 204 pour le rapport d'émission SR (Sender Report), le rapport de réception RR (Receiver Report), la description de sources SDES (Source Description), l'au revoir BYE et la définition de l'application APP (Application-defined). Le type de valeur de la charge « payload » doit faire partie du guide de services interactifs ESG. L'événement interactif est par exemple défini comme un service supplémentaire et doit être défini comme un fragment du futur modèle de données ESG.

En référence à l'annexe V, les données apparaissant juste après le champ SSRC notifient le nom du programme de service et ce nom doit être référencé auprès du guide ESG. Seul le fournisseur de service peut gérer ces informations (l'événement et le guide ESG). La charge « payload » RTP assure le transport et l'identification du service (descriptif de service) qui doit être utilisée pour interagir avec l'événement, par exemple blocage d'une page WAP au début d'un programme de publicité. L'information additionnelle (3) ainsi transportée n'affecte pas le comportement du terminal mobile (10) si ce dernier n'est pas capable d'interpréter cette information (3). La pile RTP ne sera pas considérée et les données additionnelles simplement ignorées.

Dans le premier mode de réalisation utilisant l'en-tête RTP de l'annexe III, un comportement peut être défini par rapport à chaque port UDP, défini par son adresse IP et son numéro de port (exemple : address="225.0.0.8" port="9804"). Pour identifier un comportement par rapport à un port UDP, on doit spécifier une adresse IP qui a un numéro de port en relation avec le type de comportement. Le numéro de port peut être spécifié dans le guide ESG avec le type du comportement. A titre d'exemple, si le fournisseur de service souhaite limiter l'accès au réseau WAP (certaines pages WAP), il est nécessaire de regarder toutes les adresses IP correspondant à une limitation de navigation par rapport à ce service. En fonction du service, il est possible de venir limiter simplement la navigation par le numéro de port, comme indiqué à l'annexe 1.

Cette première solution est simple et n'implique pas de nouveau protocole : il suffit de détecter si des paquets qui correspondent à un port UDP ont été réceptionnés. Si le paquet UDP correspond à un port connu de limitation, il suffit de se reporter à la définition dans l'ESG pour savoir quel est le service de limitation correspondant. Le service de limitation est naturellement synchronisé à l'aide de l'information temporelle timestamp par rapport aux événements de programmation sur le canal DVB-H utilisé par le terminal mobile (10). Le guide de service permet de définir tous les services disponibles sur le canal DVB-H et d'associer des fichiers ou une grammaire spécifique à l'adresse IP qui est définie par le fichier SDP. Comme montré à l'annexe II, le fichier SDP spécifie certaines règles IP :
- l'adresse de source, l'adresse de destination (type multicast) ;
- un port spécifique ; et
- un type de protocole (avec la payload type du RTP).

Le type de protocole doit être spécifié car chaque protocole est un peu particulier par rapport au codeur décodeur utilisé par le terminal mobile (10). Par ailleurs, comme la liste des ports peut être assez faramineuse par rapport au protocole UDP, il faut filtrer tous les ports UDP. On comprend que le canal DVB-H est donc constamment surveillé et une table est utilisée pour permettre la comparaison des adresses IP indiquées dans les paquets reçus avec les adresses de services des fournisseurs.

Les moyens (15) de réception IPDC sont agencés pour d'une part router les données codées audio et vidéo vers le lecteur décodeur, de façon à permettre l'affichage du programme TV sur une zone (14) de l'écran (11), et d'autre part détecter dans un port de type UDP l'information (3) incluant le descriptif de comportement. Les moyens (15) de réception IPDC permettent en outre d'interpréter le descriptif de comportement pour déclencher un comportement d'une des applications interactives (A1, A2) en exécutant un appliquette selon une méthode spécifique, par exemple comme celle indiquée dans l'annexe VI.

Le terminal mobile (10) va recevoir des données respectives qui vont être routées au niveau IP sur telle ou telle brique logicielle qui va être capable de comprendre les sections de données mise en « buffer » par les moyens (15) de réception IPDC. Cette compréhension est permise par la réception de données de guide ESG mises à jour par un module (MD1) de données ESG. Dans un mode de réalisation de la figure 6, une station (400) d'opérateur de service comprend un module (MD1) de données ESG relié au serveur fournisseur de service IPDC (40). Le module (MD1) permet de définir dans le guide ESG tous les ports possibles (le port faisant référence à un type d'application ou un type restrictif ou un type interactif). Un module (MD2) de données SI (System Information) peut également être prévu dans la station (400) d'opérateur de service. Un module (MD3) de données d'opérateur permet par exemple de fournir des données en relation avec un programme diffusé sur un canal DVB-H à un portail de service (18) de type WAP. Des données d'opérateur peuvent également être transmises au serveur (40), comme illustré à la figure 6.

Dans ledit premier mode de réalisation de l'invention (voir Annexe IV), la consommation mémoire du terminal mobile peut présenter un problème et il y a en outre une limitation dans le nombre d'utilisation de ports. Il apparaît donc que ce type de solution n'est particulièrement intéressant que dans la mesure où le mécanisme de livraisons de services est assuré pour un nombre limité de programmes TV, par exemple quelques publicités.

Dans le second mode de réalisation de l'invention (voir Annexe V), la méthode n'utilise qu'un unique port afin de limiter le nombre de paquets à filtrer et limiter le nombre de paquets transmis sur le réseau, le fournisseur de service sélectionnant un mécanisme de contrôle comportemental qui n'est spécifié que sur un seul port de type UDP.

Avec un ou plusieurs ports UDP, il est possible de corréler le temps des données codées vidéo /audio avec le paquet RTP contenant l'information additionnelle (3). Pour pouvoir identifier l'application avec lequel le mobile doit interagir, l'adjonction de données propriétaires derrière l'entête RTP permet de faire référence à un numéro de programme dans le guide ESG. Des tables prévues dans le guide, mises à jour dans le terminal (10), assurent la corrélation entre le numéro de programme fourni par l'information additionnelle (3) et le service correspondant indiqué dans le guide ESG. Avec plusieurs sessions IP/UDP, plusieurs fournisseurs de service interactif peuvent être utilisés pour délivrer par exemple des applicatifs, chaque fournisseur se voyant attribué un port UDP ou une session IP/UDP différent.

Les données propriétaires comportent aussi un numéro de comportement (ça peut être un comportement interactif, restrictif..). Sur chaque numéro de programme, on peut avoir par exemple n=3 comportements susceptibles de s'appliquer de façon cumulative à ce programme. Par exemple, une restriction à une certaine page web est déclenchée, un message de type « TAGGED-SMS » est envoyé, et le portable clignote. Une même application (A1, respectivement A2) peut donc déclencher plusieurs comportements. Naturellement, chaque comportement peut aussi être associé à une seule application. Dans un deuxième exemple, les téléspectateurs d'un jeu télévisé peuvent visualiser des informations supplémentaires en bas de leur écran. Un premier message transmet la possibilité d'afficher un bandeau de publicité animé, la sélection de celui-ci permettant de recevoir des messages avec les liens des produits. Un deuxième message indique le type d'applicatifs à utiliser pour formater l'écran du terminal. La sélection de l'application bandeau publicitaire formate l'écran de telle manière à voir apparaître ce bandeau.

Dans un mode de réalisation de l'invention, l'information (3) de description d'un comportement peut être définie directement sur un port UDP vidéo ou audio en insérant des paquets RTP de comportement. Le bit de marquage M de l'en-tête RTP utilisé avec un nouveau type de « payload » permet de faire réagir le lecteur du terminal mobile (10).

Il est possible aussi de dire/spécifier à quel moment on va utiliser l'application, ce qui permet de n'utiliser les capacités mémoires inutiles qu'au bon moment. Une appliquette de type JAVA peut être incluse par exemple dans le guide ESG XML avec un tag. Il suffit alors d'exécuter l'appliquette JAVA avec la méthode spécifiée. L'appliquette attend les paquets RTP qui lui sont spécifiques et peut être ainsi déclenchée sélectivement. Un module de chargement d'application prévu dans le terminal (10) permet d'acheminer les paquets RTP spécifiques à la dite application.

Le canal (transmettant les paquets RTP sur un port spécifique) fait la liaison entre le temps, les donnés audio, vidéo et l'information additionnelle (3). Le paquet RTP permet de signifier, via un événement/méthode, le besoin ou non de déclencher l'appliquette d'une manière déterminée. La méthode spécifiée via le paquet RTP exécute l'appliquette JAVA avec les paramètres d'entrée et de sortie spécifiés par des données auxiliaires SDP de l'ESG qui correspondent à l'événement diffusé.

Des comportements divers peuvent être déclenchés avec la méthode selon l'invention. Par exemple, pendant la diffusion d'un flux video/audio, il est possible de spécifier un comportement type pour le terminal mobile (10). Lors de l'activation d'un comportement SMS, la méthode qui s'ensuit attend derrière un déclenchement (appui touche..) pour continuer de sélectionner une application (par ex formater l'écran de telle manière) et mettre en mémoire le numéro de la destination et venir présélectionner des solutions 1 /2/3/4.

Il est envisageable d'utiliser une interface GUI (Graphical User Interface) pour réaliser ce type de sélection, en venant valider la sélection présentée dans un menu ou par des noms. Ceci permet l'envoi ou la réception d'un message SMS directement sous la forme d'une application graphique.

Un comportement du type enregistrement de programme TV peut également être déclenché grâce à la méthode selon l'invention. La méthode de gestion du comportement d'application selon l'invention peut permettre la visualisation en différé de petits programmes, tels le bulletin météo, un flash d'informations, une bande annonce de film, etc. Il n'existe pas en effet de méthode avec le protocole IP en mode « broadcasting » DVB-H pour venir sélectionner et tronçonner un flux IP en fonction des données. En général, il est nécessaire, pour enregistrer un programme particulier (possible en MPEG2-TS mais pas en IP), de déclencher l'enregistrement 1 minute avant et d'achever celui-ci 1 minute après pour être sûr de bien enregistrer la totalité d'un programme déterminé. Le mode de correction d'erreur FEC (Forward Error Corrrection) est utilisé pour la fourniture de services selon la technologie IPDC, de sorte que les informations de signalement du début et de l'arrêt de l'enregistrement, fournies dans l'information additionnelle (3), pourront bien être prises en compte. Dans un mode de réalisation, la méthode selon l'invention peut prévoir une étape d'analyse d'un début ou d'un commencement de réception d'une application d'interactivité pour détecter la perte d'un ou plusieurs paquets. L'interprétation d'un début de réception avec des paquets manquants permet alors d'ajuster la réception de l'application d'interactivité.

L'appliquette comportementale appelée par le paquet RTP comportemental lancera une méthode permettant la mémorisation des images et du son pendant le programme qui émet les RTP comportementaux.

Un comportement d'alerte peut aussi être utilisé pour prévenir des groupes ou sociétés spécialisés dans l'intervention rapide, par exemple les pompiers. Un message d'urgence est accessible via un abonnement spécial (uniquement pour les pompiers par exemple). Un tel message peut être inséré dans n'importe quel burst (D). Lorsque ce service de messagerie d'urgence est dédié à un groupe/société spécifique (pompiers), le serveur (40) fournisseur de service IPDC (40) insère le message en coordination avec le programme auquel le groupe s'est abonné. Cette méthode permet en outre d'économiser la batterie du terminal mobile car si l'utilisateur regarde un programme, il n'est pas nécessaire que le terminal analyse un indicateur PID (60) ou burst spécifique pour recevoir ce type d'information. Tout le monde y gagne en bande passante.

La méthode selon l'invention peut permettre, pendant une session de transfert de flux multimédias vers le terminal mobile (10), de remplacer un contenu vidéo ou audio par un autre contenu audio ou vidéo, ou encore par une information différente (image fixe, message(s) à afficher, ...). De manière non limitative, le cadre d'utilisation de ce type de remplacement est principalement orienté au domaine de la publicité. Il est connu de l'homme de métier que les flux audio/vidéo utilisent le protocole RTP pour être diffusés : ils sont donc temporellement référencés et peuvent avec le protocole RTCP être liés/synchronisés avec une source différente de la source d'origine.

Il peut alors être prévu une corrélation entre un flux audio/vidéo et une action d'interaction. Dans ce contexte, une source (même indépendante) de gestion de comportement référence par exemple le début de chaque publicité avec un comportement qui référence une application de lecture/juxtaposition de flux afin de lire un fichier particulier ou un autre flux audio/vidéo. Le but de l'opération est de remplacer provisoirement le flux transféré vers le terminal (10) par un autre contenu. Le comportement référencé est présent dans ladite information additionnelle (3) qui forme dans ce cas un indicateur du début de chaque émission à remplacer (de type publicitaire ou autre). Le comportement est détecté par un module de détection des moyens de réception IPDC (15) et l'application référencée est activée. La fin de l'émission à remplacer peut être déduite à l'aide de données représentatives de la durée de cette émission, présentes dans l'information additionnelle (3). La détermination de la fin peut aussi être réalisée par une détection d'un comportement suivant, qui référence un retour à une lecture normale du flux audio/vidéo délivré au terminal mobile (10) via la technologie DVB-H.

Dans une forme de réalisation, deux informations additionnelles (3) distinctes de gestion d'application, reçues avec le flux délivré, peuvent être utilisées de manière à ce que :
- la première information additionnelle référence le début de chaque publicité en indiquant son type (publicité automobile, parfum, couches, savon, produits ménager, jouet, ...) ; et
- la deuxième information additionnelle permette d'orienter le choix de l'application en temps réel en fonction de l'audimat ou des utilisateurs ainsi repérés comme regardant cette chaîne audio/vidéo.

Il est à noter que l'utilisateur ou l'application peuvent orienter le choix final de la vidéo ainsi jouée suivant les préférences, tels que le sexe, l'age, les occupations, ou encore les souhaits personnels. Un utilisateur peut avantageusement avoir le choix d'utiliser ou non cette méthode via une interface de paramétrage du terminal (10).

Les objets ou fichiers audio/vidéo de substitution peuvent être transmis dans un guide ESG (Electronique Service Guide). L'applicatif référencé dans l'information additionnelle (3) consulte dans ce cas les fichiers existants (prévus à cet effet) et en choisit par exemple au moins un par comparaison avec la description de gestion d'application délivrée dans le flux par la technologie DVB-H et avec la configuration fixée au niveau du terminal (10) (configuration d'applicatif et personnelle). Ainsi, un bon fichier va être choisi ou encore le flux principal va être conservé. Il sera compris de l'homme de métier que le flux audio/vidéo qui devra être le plus regardé sera bien évidemment le flux principal, les substitutions n'étant normalement que temporaires.

Les objets de substitution ne sont pas obligatoirement des fichiers. Par exemple, le flux remplacé peut provenir d'un autre flux principal. Concrètement, un groupe possédant plusieurs chaînes de télévision (groupe France Télévision par ex.) peut créer un flux orienté publicité et permettre dans un décalage temporel de proposer plusieurs types de publicité délivrés en parallèle de la publicité initialement proposée ou du flux qui sera remplacé. Ces objets peuvent également provenir d'un autre contexte que celui de la diffusion radio par DVB-H. En particulier, une délivrance de ces objets peut être obtenue par un canal interactif ou 3G (3^{ème} génération pour la radiotéléphonie) ou encore par un fichier audio/vidéo stocké au niveau du terminal mobile (10).

Il doit être compris que les sous-titrages sont également un des exemples d'utilisation tout comme l'utilisation du format BIFS (BInary Format for Scene description) afin de par exemple : remplacer une zone (par exemple dans un vêtement) estampillée d'un logo via BIFS par une même zone avec un logo différent du premier. Ainsi, il est permis de remplacer les panneaux publicitaires des stades de foot pour être à même de respecter la réglementation d'un pays qui retransmet le match.

L'invention permet avantageusement d'identifier et de déclencher une méthode/un comportement sur les applications d'un terminal mobile (10) dans un laps de temps bien précis tout en répondant aux problèmes de synchronisation et de diffusion. En outre, le comportement peut être déclenché sans que l'utilisateur soit abonné à d'autres PID que celui regardé.

Le mécanisme de livraison de comportements selon l'invention apporte une interactivité supplémentaire, grâce à l'utilisation du protocole RTP, sans attendre la norme plate-forme domestique multimédia MHP (Multimedia Home Platform) dont le lancement s'annonce particulièrement tardif par rapport à l'arrivée de la technologie DVB-H. De plus, cette invention permet d'apporter plus de flexibilité sur la plateforme sans que le terminal ne prenne en charge toute la machine MHP. Les terminaux utilisant la technologie DVB-H auront de multiples facettes et seront dotées de nombreuses applications. Il est donc inconcevable pour un terminal mobile d'embarquer une machine si complexe et coûteuse en énergie, en ressource et en espace mémoire.

Pour un aspect de sécurité, il est tout à fait concevable voire recommandé de fournir des applicatifs comportementaux par voie protégé. Un processus de cryptage peut être mis en oeuvre pour les communications, par exemple avec ISMACryp, IPSee, SRTP et autres logiciels/algorithmes de sécurisation afin d'empêcher des pirates ou personne malveillantes de modifier des comportements.

Il doit être évident pour les personnes versées dans l'art que la présente invention permet des modes de réalisation sous de nombreuses autres formes spécifiques sans l'éloigner du domaine d'application de l'invention comme revendiqué. Entre autre, il est clair que le nombre de bits défini dans l'exemple de l'annexe V peut naturellement être modifié.

### ANNEXE I

Exemple d'implémentation utilisée dans l'invention pour définir des autorisations à des pages WAP

```
<ServiceInteractivity>
      <Behavior behaviorEnum ="1" address="FF15:0:0:0:0:0:0:7502" port="9806" />
      <Behavior behaviorEnum ="2" address="FF15:0:0:0:0:0:0:7501" port="9804" />
      <Behavior behaviorEnum ="3" address="FF15:0:0:0:0:0:0:7503" port="9808" />
   <ServiceInteractivity>
   <Behavior>
      <BehaviorInterface enum = "1" Limitation="true" Waplimited = "www.cocacola.com" />
      <BehaviorInterface enum = "2" Limitation="none" />
      <BehaviorInterface enum = "3" Limitation="none" />
   <Behavior>
```

### ANNEXE II

### Exemple de fichier (syntaxe) SDP

v=0
o=dco 2156 3309147600 IN IP6 FF15:0:0:0:0:0:1:6701
s=
c=IN IP6 FF15:0:0:0:0:0:1:6701 t=330921 0000 3309296400
a=SdpplinVersion: 1610641560
a=control:*
a=LiveStream:integer;1
a=StreamCount:integer;1
a=Timeout:integer;30
a=FileName:string;"broadcast.sdp"
m=audio 5006 RTP/AVP 97
i=Session 2156
c=IN IP6 FF15:0:0:0:0:0:1:6701
b=AS:64
a=controlatreamid=0
a=length:npt=0
a=rtpmap:97 MP4A-LATM/32000/2
a=mimetype:string; "audio/MP4A-LATM" a=ForceRTP:integer;1
a=Streamld:integer;0
a= ASMRuleBook:string; "RTCPRule=0, TimestampDelivery=True,Marker=0;
RTCPRule= 1, TimestampDeliery=True, Market=1;" a= PayloadWirePacket:string;"rtp"
a=fmtp:97 profile-level-id=15; object=2; cpresent=O; config=400025203FCO

### ANNEXE III

### Format classique de l'entête RTP

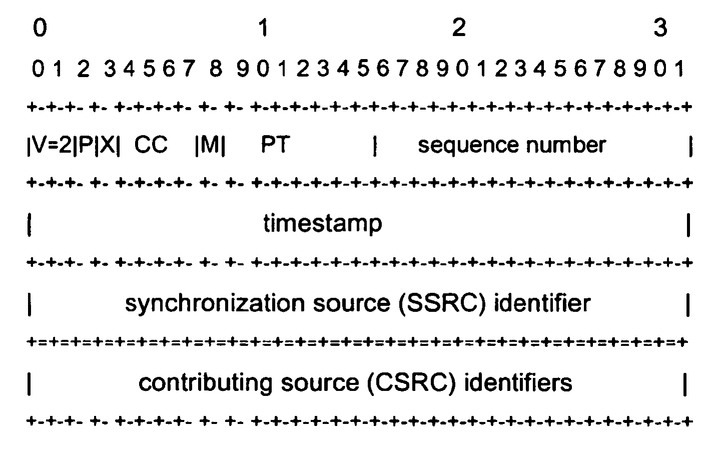

- version V : 2 bits, V=2
- padding P : 1 bit, si P=1 le paquet contient des octets additionnels de bourrage (padding) pour finir le dernier paquet.
- extension X : 1 bit, si X=1 l'entête est suivie d'un paquet d'extension
- CSRC count CC : 4 bits, contient le nombre de CSRC qui suivent l'entête
- marker M : 1 bit, son interpretation est définie par un profil d'application (profile)
- payload type PT : 7 bits, ce champ identifie le type du payload (audio, vidéo, image, texte, html, etc.)
- sequence number : 16 bits, sa valeur initiale est aléatoire et il s'incrémente de 1 à chaque paquet envoyé, il peut servir à détecter des paquets perdus
- timestamp : 32 bits, reflète l'instant d'échantillonnage du premier octet du paquet
- SSRC: 32 bits, identifie de manière unique la source, sa valeur est choisie de manière aléatoire par l'application
- CSRC : 32 bits, identifie les sources contribuantes.

### ANNEXE IV

Format selon l'invention de l'entête RTP, en version lite, c'est-à-dire sans payload.

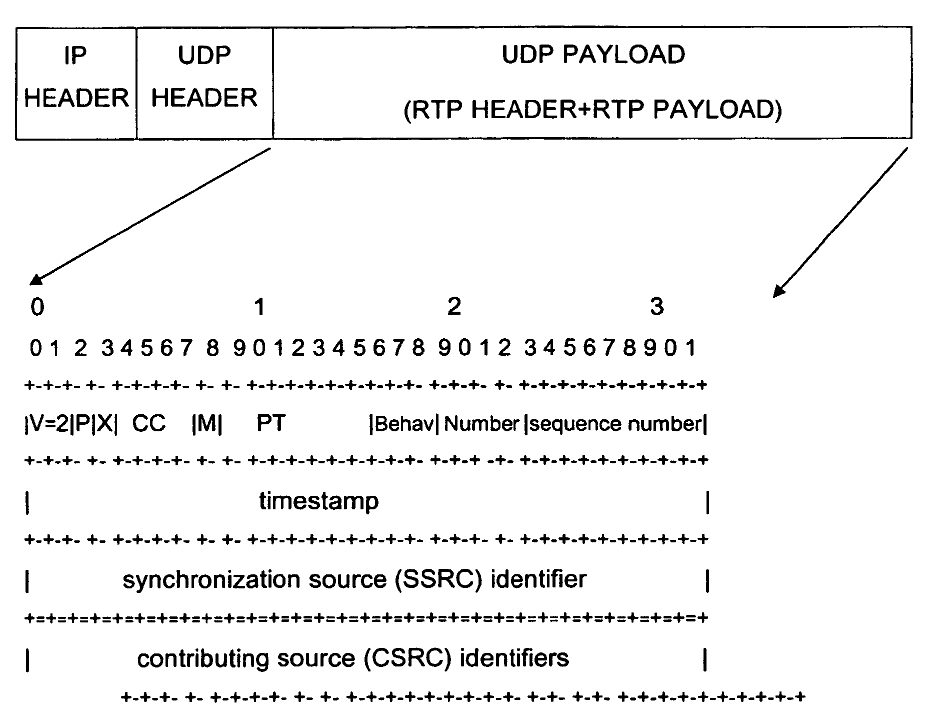

Il faut noter que dans cette version lite, une seule application interactive est prévue, la taille du nombre "séquence number" étant ainsi réduite au profit du comportement "Behav" et de son numéro "Number" associé.

### ANNEXE V

Format selon l'invention de l'entête RTP, en version compète/étendue

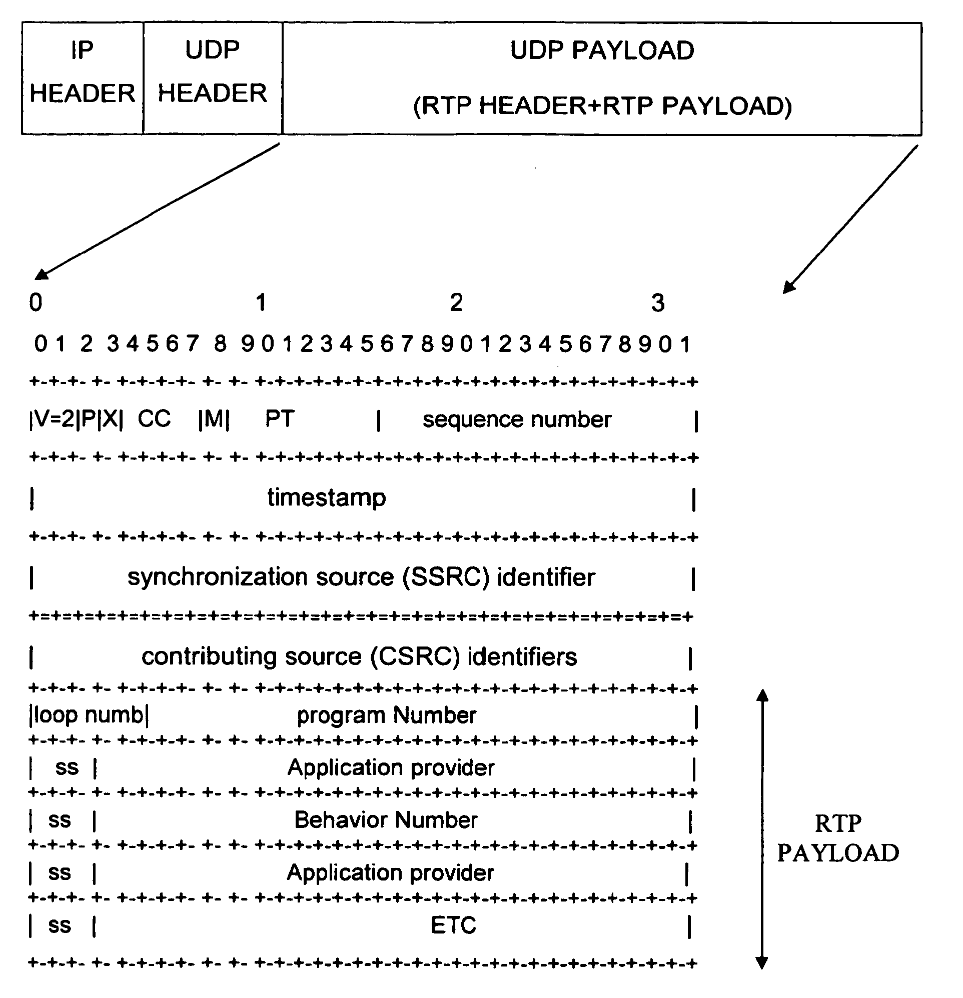

### ANNEXE VI

### Exemple de méthode SMS

```
    <method>
     <SMS:0001>
           <service_id:125 SMS_number=128 name="who wants to be a millionaire">
            <answer: A1="A" G1="" A2="B" G2="" A3="C" G3="" A4="D" G4="">
            <Bgd:"no_bgd">
           <service_id:124>
           <service_id:12>
     </SMS:0001>
    </method>
```

Ax représente une forme textuelle de réponse à envoyer vers un opérateur en utilisant le numéro de SMS « SMS_number » ;
Gx représente une forme graphique de réponse pouvant être tracée sur l'écran du terminal ;
bgd représente un arrière-plan pouvant être tracé sur l'écran.

## Revendications

1. Procédé de gestion du comportement d'au moins une application interactive, l'application interactive appartenant à un terminal mobile (10) doté de moyens (15) de réception selon le protocole de diffusion de données Internet, dit IPDC, Internet Protocol Data Casting, le procédé étant mis en oeuvre lors de la diffusion sur un canal selon la norme de diffusion vidéo numérique pour terminaux mobiles, dite DVB-H, Digital Video Broadcast-Handheld, vers ledit terminal (10) d'au moins un programme télévisuel déterminé provenant d'un serveur fournisseur de service IPDC (40) et comportant :
- une étape (51) d'encapsulation de données selon le protocole de type transport sans connexion, dit UDP, User Datagram Protocol, et le protocole de transport de données temps-réel, dit RTP, Real Time Protocol, mise en oeuvre par ledit serveur (40), comprenant l'insertion, dans des paquets UDP et RTP (P1, P2) contenant des données codées audio et vidéo correspondant au(x)dit(s) programme(s) télévisuel(s) déterminé(s), d'une information (3) incluant un descriptif de comportement associée à un port UDP (P1) ;
- une étape (52) d'envoi vers le terminal mobile (10), par ledit serveur fournisseur de service IPDC (40) à travers le canal DVB-H, d'au moins une trame de paquets de transport incluant au moins les données encapsulées lors de ladite étape (51) d'encapsulation,
- une étape (53) de réception par un récepteur DVB-H du terminal mobile (10) des données envoyées par le serveur fournisseur de service IPDC (40) ;
- une étape (54) de détection utilisant les moyens (15) de réception IPDC du terminal mobile (10) pour détecter, au niveau d'un port de type UDP, une réception de l'information (3) incluant le descriptif de comportement ;
- une étape (55) de lecture utilisant un lecteur décodeur du terminal mobile (10) pour lire des données codées audio et vidéo inclues dans les données reçues par le récepteur DVB-H, et déclencher un affichage de programme(s) télévisuel(s) TV sur au moins une zone (14) d'un écran (11) du terminal mobile (10) ; et
- une étape (56) d'interprétation du descriptif de comportement pour déclencher un comportement déterminé de la ou des application(s) interactive(s) (A1, A2) stockée(s) dans des moyens de mémorisation (13) du terminal mobile (10).

2. Procédé selon la revendication 1, **caractérisé en ce que** la transmission entre le serveur (40) et le terminal mobile (10) des données encapsulées lors de ladite étape (51) d'encapsulation utilise des couches protocolaires incluant une couche RTP, une couche UDP, une couche IP, une couche selon une encapsulation de données génériques, dite MPE, et une couche selon un train de transport, dit TS.

3. Procédé selon la revendication 1 ou 2, **caractérisé en ce que** l'étape (54) de détection comprend une identification du port UDP par un numéro unique au sein d'une adresse IP déterminée.

4. Procédé selon une des revendications 1 à 3,**caractérisé en ce que** l'étape (51) d'encapsulation comprend l'insertion de données de synchronisation prévues pour permettre aux moyens (15) de réception IPDC du terminal mobile (10) de synchroniser au moins un paquet RTP contenant l'information incluant le descriptif de comportement avec des paquets (62) RTP contenant des données codées audio et vidéo correspondant au(x) programtne(s) télévisuels déterminé(s).

5. Procédé selon une des revendications 1 à 4, **caractérisé en ce que** l'insertion de l'information (3) incluant le descriptif de comportement comprend une étape de description du port UDP associé à ladite information.

6. Procédé selon une des revendications 1 à 5, **caractérisé en ce que** l'étape d'envoi comprend une transmission radio unidirectionnelle de la ou des trame(s) par une antenne (100) de transmission DVB-H reliée au serveur fournisseur de service IPDC (40).

7. Procédé selon la revendication 5 ou 6, **caractérisé en ce que** l'étape de description du port UDP est formulée avec au moins un fichier de type selon le, protocole de description de session, dit SDP.

8. Procédé selon une des revendications 5 à 7, **caractérisé en ce que** l'étape de description du port UDP est formulée par un guide de service, dit ESG, agencé pour faire référence à au moins un fichier SDP.

9. Procédé selon une des revendications 5 à 7, **caractérisé en ce que** l'étape de description du port UDP est formulée par un guide ESG agencé pour faire référence à au moins une syntaxe d'un fichier SDP.

10. Procédé selon une des revendications 1 à 9, **caractérisé en ce que** ladite étape (55) de lecture est modifiée par l'application interactive (A1, A2) pour permettre temporairement une lecture de données de substitution sélectionnées en fonction dudit descriptif de comportement.

11. Procédé selon une des revendications 1 à 10, **caractérisé en ce que** ladite information (3) est contenue dans un en-tête RTP.

12. Procédé selon une des revendications 1 à 10, **caractérisé en ce que** ladite information (3) comprend des données propriétaires suivant un en-tête RTP.

13. Procédé selon une des revendications 1 à 10, **caractérisé en ce que** ladite information (3) comprend une définition d'un comportement d'application et **en ce que** l'étape d'encapsulation est adaptée pour encapsuler ladite information dans des paquets RTP insérés sur un port UDP vidéo ou audio.

14. Procédé selon une des revendications 1 à 13, comprenant l'utilisation d'un indicateur PID pour indiquer des données représentatives d'un guide de programmes ou d'informations sur des fréquences qui composent un bouquet complet de programmes.

15. Procédé selon une des revendications 1 à 10, **caractérisé en ce qu'**il comprend une étape d'insertion de ladite information (3) dans un en-tête RTP.

16. Procédé selon une des revendications 1 à 10, **caractérisé en ce qu'**il comprend une étape d'insertion de ladite information (3) dans une charge utile RTP.

17. Procédé selon la revendication 16, **caractérisé en ce que** l'étape d'insertion dans la charge utile RTP comprend :
- une insertion d'un numéro de comportement ;
- une insertion d'un numéro de service qui permet d'identifier dans le guide des programmes un service devant avoir un changement de comportement ;
- une insertion d'un numéro de fournisseur d'applicatifs qui permet d'identifier, dans une liste, une appliquette ou un exécutable à utiliser ; et
- une insertion d'un indicateur qui permet d'identifier si une application est en cours de fonctionnement ;
et **en ce que** le numéro du comportement indique à exécutable quel comportement le terminal mobile (10) doit avoir, le numéro du fournisseur indique la provenance dudit comportement et le numéro de progamme auxquels ce comportement est lié.

18. Procédé selon la revendication 16 ou 17, **caractérisé en ce qu'**il comprend une étape d'analyse d'un début ou d'un commencement de réception d'une application d'interactivité pour détecter la perte d'un ou plusieurs paquets.

19. Procédé selon une des revendications 1 à 18, **caractérisé en ce que** l'étape (54) de détection comprend une détection d'un premier descriptif de comportement représentatif d'une catégorie de programme, le premier descriptif de comportement étant utilisé lors de l'étape (56) d'interprétation en combinaison avec un indice de sélection d'une application interactive (A1, A2) pour permettre de déclencher le comportement, l'indice de sélection étant extrait d'un second descriptif de comportement ou de paramètres de configuration fixés au niveau du terminal mobile (1) en fonction de ladite catégorie de programme.

20. Procédé selon une des revendications 1 à 9, **caractérisé en ce qu'**il comprend une étape de sélection d'un unique port UDP pour recevoir ladite information (3), le serveur fournisseur de service IPDC (40) sélectionnant un mécanisme de contrôle comportemental sur ledit port sélectionné.

21. Procédé selon la revendication 20, **caractérisé en ce qu'**il comporte une étape d'identification d'une application, ladite étape d'identification étant mise en oeuvre dans le terminal mobile (10) par récupération de données propriétaires placées derrière l'en-tête RTP, et une étape d'interprétation d'un guide de service mémorisé dans le terminal mobile (10), ladite étape d'interprétation étant réalisée par les moyens (15) de réception IPDC pour effectuer une corrélation entre un numéro de programme fourni par ladite information(3) et un service correspondant indiqué dans le guide de service.

22. Terminal mobile (10) comprenant des moyens de mémorisation (13) pour stocker au moins une application interactive (A1, A2), des moyens (15) de réception selon le protocole de diffusion de données Internet, dit IPDC, incluant un récepteur selon la norme de diffusion vidéo numérique pour terminaux mobiles, dite DVB-H, pour recevoir au moins un programme télévisuel déterminé diffusé sur un canal DVB-H, **caractérisé en ce que** les moyens (15) de réception sont agencés pour d'une part router des données codées audio et vidéo correspondant au(x)dit(s) programme(s) télévisuel(s) vers un lecteur décodeur prévu pour déclencher un affichage dudit ou desdits programme(s) télévisuels sur au moins une zone (14) d'un écran (11) du terminal mobile (10), et d'autre part détecter dans un port selon le protocole de transport sans connexion, dit UDP parmi des données du ou desdits programme(s) télévisuel(s) reçues par les moyens (15) de réception IPDC, une information (3) incluant un descriptif de comportement, les moyens (15) de réception IPDC comportant en outre des moyens pour interpréter ledit descriptif de comportement pour déclencher un comportement déterminé de la ou des application(s) interactive(s) (A1, A2).

23. Terminal mobile (10) selon la revendication 22, **caractérisé en ce que** les moyens (15) de réception comprennent des moyens pour recevoir et interpréter des données indiquant des adresses IP et un numéro de port relatif au(x) programme(s) télévisuel(s) à afficher, en fonction de paramètres d'abonnement relatifs à un service de diffusion DVB-H déterminé, lesdits paramètres étant répertoriés dans un guide de service, dit ESG.

24. Terminal mobile (10) selon la revendication 22 ou 23, comprenant des moyens d'accès à un portail de service (18) de type selon le protocole de navigation, dit WAP, via une liaison réseau bidirectionnelle et des moyens d'autorisation d'accès à un service WAP.

25. Serveur fournisseur de service selon le protocole de diffusion de données Internet, dit IPDC (40), comportant des moyens de transmission selon la norme de diffusion vidéo numérique pour terminaux mobiles, dite DVB-H, à destination de terminaux mobiles (10), **caractérisé en ce qu'**il comporte un module d'encapsulation selon le protocole IP agencé pour :
- encapsuler des données selon le protocole de transport sans connexion, dit UDP, et le protocole de transport de données temps-réel, dit RTP, comprenant l'insertion, dans des paquets de type UDP et RTP (P1, P2) contenant des données codées audio et vidéo correspondant à au moins un programme télévisuel déterminé, d'une information (3) incluant un descriptif de comportement associé à un port UDP (P1) ledit descriptif déclenchant un comportement déterminé d'au moins une application interactive stockée dans les moyens de mémorisation du terminal mobile de destination ;
et **en ce que** les moyens de transmission DVB-H sont agencés pour :
- envoyer à travers un canal DVB-H, au moins une trame de paquets de transport incluant au moins les données encapsulées par le module d'encapsulation.

26. Procédé de gestion du comportement d'une application interactive dans un terminal mobile (10) doté de moyens (15) de réception selon le protocole de diffusion de données Internet, dit IPDC, le procédé étant mis en oeuvre lors de la diffusion sur un canal selon la norme de diffusion vidéo numérique pour terminaux mobiles, dite DVB-H, vers ledit terminal (10) d'au moins un programme télévisuel déterminé provenant d'un serveur fournisseur de service IPDC (40), **caractérisée en ce qu'**il comporte :
- une étape (53) de réception par un récepteur DVB-H des moyens (15) de réception IPDC de trames de transport envoyées par le serveur fournisseur de service IPDC, les trames de transport incluant des données codées audio et vidéo correspondant au(x)dit(s) programme(s) télévisuel(s) déterminé(s) et une information (3) incluant une descriptif de comportement associée à un port selon le protocole de transport sans connexion, dit UDP ; et
- une étape (54) de détection utilisant les moyens (15) de réception IPDC pour détecter au niveau d'un port UDP une réception de l'information (3) incluant le descriptif de comportement ;
- une étape (55) de lecture utilisant un lecteur décodeur du terminal mobile (10) pour lire des données codées audio et vidéo parmi les données reçues par le récepteur DVB-H et déclencher un affichage de programme(s) télévisuel(s) sur au moins une zone (14) d'un écran (11) du terminal mobile (10) ; et
- une étape (56) d'interprétation de ladite information incluant le descriptif de comportement pour déclencher un comportement déterminé d'au moins une application interactive (A1, A2) stockée dans des moyens de mémorisation (13) du terminal mobile (10).

27. Procédé selon la revendication 26, **caractérisée en ce que** ledit comportement déterminé correspond à limiter la navigation sur une page selon le protocole de navigation, dit WAP, lors de la diffusion du ou des programme(s) télévisuel(s) déterminé(s) et/ou à charger au préalable une page WAP lors de la diffusion du ou des programme(s) télévisuel(s) déterminé(s) avant affichage sur l'écran (11) dudit terminal (10).

28. Procédé selon la revendication 27, **caractérisée en ce que** l'étape (56) d'interprétation de ladite information (3) déclenche sélectivement une application interactive du terminal (10), par acheminement de paquets RTP spécifiques à la dite application depuis un module de chargement d'application.

## Claims

1. Process for managing the behaviour of at least one interactive application, the interactive application belonging to a mobile terminal (10) having receiving means (15) in accordance with Internet Protocol Datacasting, known as IPDC, the process being implemented when broadcasting at least one given televisual programme originating from an IPDC service-supplying server (40) to said terminal (10) on a channel in accordance with the digital video broadcasting standard for mobile terminals, known as DVB-H Digital Video Broadcasting -- Handheld, and comprising
- an encapsulation step (51) that encapsulates data in accordance with the connectionless transport protocol, known as UDP (User Datagram Protocol), and the protocol for transporting data in real-time, know as RTP (Real Time Protocol), implemented by said server (40), comprising the insertion, into UDP and RTP packets (P1, P2) containing coded audio and video data corresponding to said given televisual programme(s), of information (3) including a behaviour description associated with a UDP port (P1);
- a transmission step (52) that transmits to the mobile terminal (10), by said IPDC service-supplying server (40) via the DVB-H channel, at least one frame of transport packets including at least the data encapsulated in said encapsulation step (51),
- a receiving step (53) that receives, via a DVB-H receiver of the mobile terminal (10), data sent by the IPDC service-supplying server (40);
- a detection step (54) that uses the IPDC receiving means (15) of the mobile terminal (10) to detect, at the level of a UDP-type port, the reception of the information (3) including the behaviour description;
- a reading step (55) that uses a decoding reader of the mobile terminal (10) to read coded audio and video data included in the data received by the DVB-H receiver and to activate the display of TV televisual programme(s) on at least one area (14) of a screen (11) of the mobile terminal (10); and
- an interpretation step (56) that interprets the behaviour description in order to activate a given behaviour of the interactive appiication(s) (A1, A2) stored in memory means (13) of the mobile terminal (10).

2. Process according to claim 1, **characterised in that** the transmission of the data encapsulated in said encapsulation step (51) between the server (40) and the mobile terminal (10) uses protocol layers including an RTP layer, a UDP layer, an IP layer a layer in accordance with generic data encapsulation, known as MPE, and a layer in accordance with a transport stream, known as TS.

3. Process according to either claim 1 or claim 2, **characterised in that** the detection step (54) comprises identification of the UDP port by a unique number within a given IP address

4. Process according to any one of claims 1 to 3, **characterised in that** the encapsulation step (51) comprises the insertion of synchronisation data provided to enable the IPDC receiving means (15) of the mobile terminal (10) to synchronise at least one RTP packet containing the information including the behaviour description with RTP packets (62) containing coded audio and video data corresponding to the given televisual programme(s).

5. Process according to any one of claims 1 to 4, **characterised in that** the insertion of the information (3) including the behaviour description comprises a step that describes the UDP port associated with said information.

6. Process according to any one of claims 1 to 5, **characterised in that** the transmission step comprises unidirectional radio transmission of the frame(s) by a DVB-H transmission antenna (100) connected to the IPDC service-supplying server (40)

7. Process according to either claim 5 or claim 6, **characterised in that** the UDP port description step is formulated with at least one file of the type known as session description protocol (SDP).

8. Process according to any one of claims 5 to 7, **characterised in that** the UDP port description step is formulated by a service guide, known as ESG, arranged to refer to at least one SDP file.

9. Process according to any one of claims 5 to 7, **characterised in that** the UDP part description step is formulated by an ESG guide arranged to refer to at least one syntax of an SDP file.

10. Process according to any one of claims 1 to 9. **characterised in that** said reading step (55) is modified by the interactive application (A1, A2) to temporarily enable reading of substitution data selected in accordance with said behaviour description.

11. Process according to any one of claims 1 to 10, **characterised in that** said information (3) is contained in an RTP header.

12. Process according to any one of claims 1 to 10, **characterised in that** said information (3) comprises proprietary data after an RTP header.

13. Process according to any one of claims 1 to 10, **characterised in that** said information (3) comprises a definition of an application behaviour and **in that** the encapsulation step is adapted to encapsulate said information in RTP packets inserted into a UDP video or audio port.

14. Process according to any one of claims 1 to 13, comprising the use of a PID indicator to indicate data representative of a programme or information guide on frequencies that compose a complete package of progammes.

15. Process according to any one of ciaims 1 to 10, **characterised in that** it comprises an insertion step that inserts said information (3) into an RTP header.

16. Process according to any one of claims 1 to 10, **characterised in that** it comprises an insertion step that inserts said information (3) into an RTP payload.

17. Process according to claim 16, **characterised in that** the step that inserts into the RTP payload comprises:
- insertion of a behaviour number;
- insertion of a service number that makes it possible to identify in the programme guide a service that requires a change of behaviour;
- insertion of an application supplier number which makes it possible to identify, from a list, an applet or executable to be used; and
- insertion of an indicator that makes it possible to identify whether an application is currently running;
and **in that** the behaviour number indicates to the executable what behaviour is required of the mobile terminal (10), the supplier number indicates the source of said behaviour and the programme number with which that behaviour is associated.

18. Process according to either claim 16 or claim 17, **characterised in that** it comprises a step that analyses the start or commencement of reception of an interactive application in order to detect the loss of one or more packets.

19. Process according to any one of claims 1 to 18, **characterised in that** the detection step (54) comprises detection of a first behaviour description representing a programme category, the first behaviour description being used in the interpretation step (56) in combination with a number for selecting an interactive application (A1, A2) to enable the behaviour to be activated, the selection number being drawn from a second behaviour description or from configuration parameters determined in the mobile terminal (10) in accordance with said programme category.

20. Process according to any one of claims 1 to 9, **characterised in that** it comprises a step that selects a single UDP port to receive said information (3), the IPDG service-supplying server (40) selecting a behaviour control mechanism on said selected port.

21. Process according to claim 20, **characterised in that** it comprises an application identification step, said identification step being implemented in the mobile terminal (10) by recovering proprietary data placed after the RTP header, and a step that interprets a service guide stored in the mobile terminal (10), said interpretation step being carried out by the IPDC receiving means (15) in order to perform a correlation between a programme number supplied by said information (3) and a corresponding service indicated in the service guide.

22. Mobile terminal (10) comprising memory means (13) for storing at least one interactive application (A1, A2), receiving means (15) in accordance with internet Protocol Datacasting, known as IPDC, comprising a receiver in accordance with the digital video broadcasting standard for mobile terminals, known as DVB-H, to receive at least one given televisual programme broadcast on a DVB-H channel, **characterised in that** the receiving means (15) are arranged, on the one hand, to route coded audio and video data corresponding to said televisual programme(s) to a decoding reader provided in order to activate the display of said televisual programme(s) on at least one area (14) of a screen (11) of the mobile terminal (10) and, on the other hand, to detect information (3) comprising a behaviour description from amongst the data of said televisual programme(s) received by the IPDC receiving means (15) in a port in accordance with the connectionless transport protocol, known as UDP, the IPDC receiving means (15) additionally comprising means for interpreting said behaviour description in order to activate a given behaviour of the interactive application(s) (A1, A2).

23. Mobile terminal (10) according to claim 22, **characterised in that** the receiving means (15) comprise means for receiving and interpreting data indicating IP addresses and a port number relating to the televisual programme(s) to be displayed, in accordance with the subscription parameters relating to a given DVB-H broadcasting service, said parameters being listed in a service guide, known as an ESG.

24. Mobile terminal (15) according to either claim 22 or claim 23, comprising means of accessing a service portal (18) of the navigation protocol type known as WAP, via a bidirectional network link and means of authorising access to a WAP service.

25. Service-providing server (40) in accordance with Internet Protocol Datacasting, known as IPDC, comprising means of transmitting to mobile terminals (10), in accordance with the digital video broadcasting standard for mobile terminals, known as DVB-H, **characterised in that** it comprises an encapsulation module according to the IP protocol, arranged to:
- encapsulate data in accordance with the connectionless transport protocol, known as UDP, and the real-time data transport protocol, known as RTP, comprising the insertion, into UDP- and RTP-type packets (P1, P2) containing coded audio and video data corresponding to at least one given televisual programme, of information (3) including a behaviour description associated with a UDP port (P1), said description activating a given behaviour of at least one interactive application stored in the memory means of the end mobile terminal;
and **in that** the DVR-H transmission means are arranged to:
- send via a DVB-H channel at least one frame of transport packets including at least the data encapsulated by the encapsulation module.

26. Process for managing the behaviour of an interactive application in a mobile terminal (10) having receiving means (15) in accordance with Internet Protocol Datacasting, known as IPDC, the method being implemented when broadcasting at least one given televisual programme originating from an IPDC service-providing server (40) to said terminal (10) on a channel in accordance with the digital video broadcasting standard for mobile terminals, known as DVB-H, **characterised in that** it comprises:
a receiving step (53) that receives transport frames sent by the IPDC service-providing server via a DVB-H receiver of the IPDC receiving means (15), the transport frames including coded audio and video data corresponding to said given televisual programme(s) and information (3) including a behaviour description associated with a port in accordance with the connectionless transport protocol, known as UDP; and
- a detection step (54) that uses the IPDC receiving means (15) to detect, at the level of a UDP port, the reception of the information (3) including the behaviour description;
- a reading step (55) that uses a decoding reader of the mobile terminal (10) to read coded audio and video data from amongst the data received by the DVB-H receiver and to activate the display of a televisual programme or programmes on at least one area (14) of a screen (11) of the mobile terminal (10); and
- an interpretation step (56) that interprets said information including the behaviour description in order to activate a given behaviour of at least one interactive application (A1, A2) stored in memory means (13) of the mobile terminal (10).

27. Process according to claim 26, **characterised in that** said given behaviour corresponds to the restriction of navigation on a page in accordance with the navigation protocol, known as WAP, during broadcasting of the given televisual programme(s) and/or to the pre-loading of a WAP page during broadcasting of the given televisual programme(s) before display on the screen (11) of said terminal (10).

28. Process according to claim 27, **characterised in that** the step (56) that interprets said information (3) selectively activates an interactive application of the terminal (10) by forwarding specific RTP packets to said application from an application loading module

## Patentansprüche

1. Verfahren zur Verwaltung des Verhaltens von wenigstens einer interaktiven Anwendung, wobei die interaktive Anwendung zu einem Mobilterminal (10) gehört, das ausgestattet ist mit Empfangseinrichtungen nach dem IPDC oder "Internet Protocol Data Casting" genannten Datenverarbeitungs- bzw Internetentwicklungsprogramm, wobei das Verfahren angewendet wird beim Senden wenigstens eines bestimmten, von einem Dienstanbieter-Server stammenden Fernsehprogramms auf einem Kanal gemäß der digitalen Video-Sendenorm für Mobilterminals, genannt DVB-H oder "Digital Video Broadcast-Handheld", an das genannte Terminal (10), umfassend:
- einen Schritt (51) zur Datenkapselung gemäß dem UDP oder "User Datagram Protocol" genannten verbindungslosen Netzwerkprotokoll und dem RTP oder "Real Time Protocol" genannten Realtime-Datenübertragungsprotokoll, angewendet durch den genannten Server (40), umfassend das Einfügen einer eine Verhaltens beschreibung enthaltenden, mit einem UDP-Port (P1) verknüpften Information (3) in UDP- und RTP-Pakete (P1, P2), die dem (den) genannten bestimmten Fernsehprogramm(en) entsprechende codierte Audio- und Video-Daten enthalten;
- einen Sendeschritt (52) wenigstens eines Frames von Transportpaketen, die wenigstens die in dem Kapselungsschritt (51) gekapselten Daten enthalten, durch den genannten IPDC-Dienstanbieter-Server (40) über den DVB-H-Kanal;
- eine Empfangsschritt (53) der durch den IPDC-Dienstanbieter-Server (40) gesendeten Daten durch einen DVB-H-Empfänger des Mobilterminals (10);
- einen Detektionsschritt (54) mit Nutzung der IPDC-Empfangseinrichlungen (15) des Mobilterminals (10), um auf der Ebene eines Ports des UDP-Typs einen Empfang der die Verhaltensbeschreibung enthaltenden Information (3) zu detektierten;
- einen Leseschritt (55) mit Nutzung eines Leser-Decoders des Mobilterminals (10), um die in den durch den DVB-H-Empfänger empfangenen Daten enthaltenen codierten Audio- und Videodaten zu lesen und in wenigstens einer Zone (14) eines Bildschirms (11) des Mobilterminals (10) eine Anzeige eines oder mehrerer TV-Programme auszulösen; und
- einen Interpretationsschritt (56) der Verhaltensbeschreibung, um ein bestimmtes Verhalten der interaktiven Anwendung(en) (A1, A2) auszulösen, eingespeichert in Speichereinrichtungen (13) des Mobilterminals (10).

2. Verfahren nach Anspruch 1, **dadurch gekennzeichnet, dass** die Übertragung zwischen dem Server (40) und dem Mobilterminal (10) der während des genannten Kapselungsschritts (51) gekapselten Daten Protokollschichten benutzt, die eine RTP-Schicht, eine UDP-Schicht, eine IP-Schicht, eine Schicht gemäß einer Kapselung generischer Daten, MPE genannt, und eine Schicht gemäß einem TS genannten Transportstrom.

3. Verfahren nach Anspruch 1 oder 2, **dadurch gekennzeichnet, dass** der Detektionsschritt (54) eine Identifikation des UDP-Ports durch eine einzige Zahl innerhalb einer bestimmten IP-dresse umfasst.

4. Verfahren nach einem der Ansprüche 1 bis 3, **dadurch gekennzeichnet, dass** der Kapselungsschritt (51) die Einfügung von Synchronisationsdaten umfasst, vorgesehen um den IPDC-Empfangseinnchtungen des Mobilterminals (10) zu ermöglichen, wenigstens ein RTP-Paket zu synchronisieren, das die Information enthält, welche die Beschreibung des Verhaltens bei RTB-Paketen (62) umfasst, die dem (den) bestimmten Fernsehprogramm(en) entsprechende codierte Audio- und Video-Daten enthalten.

5. Verfahren nach einem der Ansprüche 1 bis 4, **dadurch gekennzeichnet, dass** die Einfügung der die Verhaltensbeschreibung umfassenden Information (3) einen Beschreibungsschritt des mit der genannten Information verknüpften UDP-Ports umfasst.

6. Verfahren nach einem der Ansprüche 1 bis 5, **dadurch gekennzeichnet, dass** der Sendeschritt eine unidirektionale Funkübertragung des (der) Frames durch eine mit dem IPDC-Dienstanbleter-Server verbundene DVB-H-Übergtragungsantenne (100) umfasst.

7. Verfahren nach Anspruch 5 oder 6, **dadurch gekennzeichnet, dass** der Beschreibungsschritt des UDP-Ports mit wenigstens einer Datei des Typs gemäß dem SDP genannten Sitzungsbeschreibungsprotokoll formuliert ist.

8. Verfahren nach einem der Ansprüche 5 bis 7, **dadurch gekennzeichnet, dass** der Beschrsibungsschritt des UDP-Ports formuliert wird durch einen ESG bzw. EPG genannten elektronisctren Programmführer, eingerichtet um Bezug zu nehmen auf wenigstens eine SDP-Datei.

9. Verfahren nach einem der Ansprüche 5 bis 7, **dadurch gekennzeichnet, dass** der Beschreibungsschritt des UDP-Ports formuliert wird durch einen ESG-Führer, eingerichtet um Bezug zu nehmen auf wenigstens eine Syntax einer SDP-Datei

10. Verfahren nach einem der Ansprüche 1 bis 9, **dadurch gekennzeichnet, dass** der genannte Leseschritt (55) durch die interaktive Anwendung (A1, A2) modifiziert wird, um temporär ein Lesen der in Abhängigkeit von der genannten Verhaltensbeschreibung selektierten Substitutionsdaten zu ermöglichen.

11. Verfahren nach einem der Ansprüche 1 bis 10, **dadurch gekennzeichnet, dass** die genannte Information (3) in einem RTP-Kopf enthalten ist.

12. Verfahren nach einem der Ansprüche 1 bis 10, **dadurch gekennzeichnet, dass** die genannte Information (3) proprietäre Daten gemäß einem RTP-Kopf umfasst

13. Verfahren nach einem der Ansprüche 1 bis 10, **dadurch gekennzeichnet, dass** die genannte Information (3) eine Definition eines Anwendungsverhaltens umfasst, und **dadurch, dass** der Kapselungsschritt angepasst ist, um die genannte Information in RTP-Paketen zu kapseln, eingefugt in ein Video- oder Audio-UDP-Port

14. Verfahren nach einem der Ansprüche 1 bis 13, die Benutzung eines PID zur Angabe der repräsentative Daten eines Programm- oder Informationsführers bezüglich der Frequenzen, die eine komplette Gruppe von Programmen bilden.

15. Verfahren nach einem der Ansprüche 1 bis 10, **dadurch gekennzeichnet, dass** es einen Schritt zur Einfügung der genannten Information (3) in einen RTP-Kopf umfasst.

16. Verfahren nach einem der Ansprüche 1 bis 10, **dadurch gekennzeichnet, dass** es einen Schritt zur Einfügung der genannten Information (3) in eine RTP-Nutzinformation umfasst.

17. Verfahren nach Anspruch 16, **dadurch gekennzeichnet, dass** der Einfügeschritt in die RTP-Nutzinformation umfasst.
- eine Einfügung einer Verhartensnummer.
- eine Einfügung einer Dienstnummer, die ermöglicht, in dem Programmführer einen Dienst zu identifizieren, der eine Verhattensänderung haben muss;
- eine Einfügung einer Nummer eines Anbieters von Anwendungen, die ermöglicht, in einer Liste ein Applet oder eine zu benutzende Ausführung zu identifizieren; und
- eine Einfügung eines Indikators, der ermöglicht, zu identifizierten, ob eine Anwendung gerade in Betrieb ist;
Und **dadurch**, dass die Verhaltensnummer der Ausführung angibt, welches Verhalten das Mobilterminal (10) haben muss, die Nummer des Anbieters die Herkunft des genannten Verhaltens und die Nummer des Programms angibt, mit denen bzw. dem dieses Verhalten verknüpft ist.

18. Verfahren nach Anspruch 16 oder 17, **dadurch gekennzeichnet, dass** es einen Schritt zur Analyse eines Empfangsanlangs oder -beginns einer Interaktivitätsanwendung umfasst, um den Verlust eines oder mehrerer Paketen zu detektieren

19. Verfahren nach einem der Ansprüche 1 bis 18, **dadurch gekennzeichnet, dass** der Detektionsschritt (54) eine Detektion einer für eine Programmkategorie repräsentativen ersten Verhaltensbeschreibung umfasst, wobei die erste Verhaltensbeschreibung während des Interpretationsschritts (56) in Kombination mit einen Selektionszeichen einer interaktiven Anwendung(A1, A2), um zu ermöglichen, die Anwendung auszulösen, wobei das Selektionszeichen einer zweiten Verhaltensbeschreibung oder Konfigurationsparametern entnommen wird, festgelegt auf der Ebene des Mobilterminals (1) in Abhängigkeit von der genannten Programmkategorie.

20. Verfahren nach einem der Ansprüche 1 bis 9, **dadurch gekennzeichnet, dass** es einen Seiektionsschnitt eines einzigen UDP-Ports umfasst, um die genannte Information (3) zu empfangen, wobei der IPDC-Dienstanbieter-Server in dem genannten selektierten Port einen Verhaltenskontrolimechanismus selektiert.

21. Verfahren nach Anspruch 20, **dadurch gekennzeichnet dass** es einen Schritt zur Identifikation einer Anwendung umfasst, wobei der genannte Identifikationsschritt in dem Mobilterminal (10) durch Gewinnung von hinter dem RTP-Kopf befindlicher proprietärer Daten und durchgeführt wird, sowie einen Schritt zur Interpretation eines in dem Mobilterminal (10) eingespeicherten Dienstanbieterfuhrers, wobei der genannte Interpretationsschritt durch die IPDC-Empfangseinrichtungen (15) realisiert wird, um eine Korrelation zwischen einer durch die genannte Information (3) gelieferten Information und einem in dem Dienstanbieterführer angegebenen entsprechenden Dienst.

22. Mobilterminal (10), Speichereinrichtungen (13) zum Abspeichern wenigstens einer interaktiven Anwendung (A1 A2) umfassend sowie Empfangseinrichtungen (15) gemäß dem IPDC genannten Internationalen Datenverarbeitungs- bzw. Internetentwicklungsprogramm, das einen Empfänger gemäß der DVH-H-Norm für Mobilterminals einschließt, um wenigstens ein bestimmtes, auf einem DVB-H-Kanal gesendetes Fernsehprogramm zu empfangen, **dadurch gekennzeichnet, dass** die Empfangseinrichtungen (15) eingerichtet sind, um einerseits die dem (den) genannten Fernsehprogramm(en) entsprechenden codierten Audio- und Videodaten zu einem Leser-Decoder zu routen, der vorgesehen ist, eine Anzeige des oder der genannten Fernsehprogramme in wenigstens einer Zone (14) eines Bildschirms (11) des Mobilterminals (10) auszulösen, und andrerseits in einem Port gemäß dem UDP genannten verbindungslosen Transportprotokoll unter den Daten des oder der genannten, durch die IPDC-Empfangseinrichtungen (15) empfangener) Programme eine Information (3) zu detektieren, die eine Verhatensbeschreibung enthält wobei die IPDC-Empfangseinnchturtgen (15) außerdem Einrichtungen umfassen, um die genannte Verhaltensbeschreibung zu interpretieren, um ein bestimmtes Verhalten der interaktiven Anwendung(en) (A1, A2) auszulösen.

23. Mobilterminal nach Anspruch 22, **dadurch gekennzeichnet, dass** die Empfangseinrichtungen (15) Einrichtungen zum Empfangen und Interpretieren der Daten umfassen, die IP-Adressen angeben sowie eine das (die) anzuzelgende(n) Femsehprogramm(e) betreffende Port-Nummer, in Abhangigkeit von Abonnement-Parametern bezüglich eines bestimmten DVB-H-Dienstanbieters wobei die genannten Parameter in einem ESG genannten Dienstanbieterführer erfasst werden.

24. Mobilterminal nach Anspruch 22 oder 23 mit Zugriffseinnchtungen auf ein Dienstanbieter-Portal (18) des Typs gemäß dem Navigationsprotokoll, WAP genannt, über eine bidirektionale Netzverbindung und Berechtigungsroinnchtungen für den Zugriff auf einen WAP-Dienst

25. Dienstanbieter-Server (40) gemäß IPDC mit Einrichtungen gemäß DVB-H zur Übertragung an Mobilterminals (10), **dadurch gekennzeichnet, dass** er einen Kapselungsmodul gemäß IP-Protokoll umfasst, eingerichtet für,
- das Kapseln von Daten gemäß dem UDP-Protokoll für verbindungslosen Transport und dem RTB genannten Echtzeit-Datentransportprotokoll, umfassend das Einfügen einer Information (3), die eine mit einem UDP-Port (P1) verknüpfte Verhattensbeschreibung enthält, in Pakete des Typs UDP und RTB (P1, P2) , die codierte Audio- und Videodaten enthalten, die wenigstens einem bestimmten Fernsehprogramm entsprechen, wobei die genannte Beschreibung in den Speichereinnchtungen des Bestimmungsterminals ein bestimmtes Verhalten einer eingespeicherten interaktiven Anwendung auslöst;
und **dadurch**, dass die DVB-H-Übertragungseinrichtungen eingerichtet sind, um:
- über einen DVB-H-Kanal wenigstens ein Frame von Transportpaketen zu senden, die wenigstens die durch den Kapselungsmodul gekapselten Daten enthalten

26. Verfahren zur Verwaltung des Verhaltens einer interaktiven Anwendung in einem Mobilterminal (10), das ausgestattet ist mit Empfangseinrichtungen nach dem IPDC genannten Datenverarbeitungs- bzw. internetentwlcklungsprogramm, wobei das Verfahren angewendet wird beim Senden wenigstens eines bestimmten, von einem IPDC-Dienslanbieter Server (40) stammenden Fernsehprogramms auf einem Kanal gemäß der digitalen Video-Sendenorm für Mobilterminals, genannt DVB-H, an das genannte Terminal (10), **dadurch gekennzeichnet, dass** es umfasst.
- eine Empfangsschritt (53) der durch den IPDC-Dienstanbieter-Server gesendeten Daten durch einen DVB-H-Empfänger (15), wobei die Transport-Frames dem (den) genannten bestimmten Fernsehprogramm(en) entsprechende codierte Audio- und Videodaten enthalten und eine Information (3), die eine Verhaitensbeschreibung enthält, verknüpft mit einem Port gemäß dem verbindungslosen Transportprotokoll, UDP genannt; und
- einen Deiektionsschritt (54) mit Nutzung der IPPC-Empfangseinrichtungen (15) des Mobilterminals (10), um auf der Ebene eines UDP-Ports einen Empfang der die Verhaltensbeschreibung enthaltenden Information (3) zu detektieren;
- einen Leseschritt (55) mit Nutzung eines Leser-Decoders des Mobilterminals (10), um die in den durch den DVB-H-Empfänger empfangenen Daten enthaltenen codierten Audio- und Videodaten zu lesen und in wenigstens einer Zone (14) eines Bildschirms (11) des Mobilterminals (10) eine Anzeige eines oder mehrerer TV-Programme auszulösen; und
- einen Interpretatiollsschritt (56) der Verhaltensbeschreibung, um ein bestimmtes Verhalten der interaktiven Anwendung(en) (A1, A2) auszulösen, eingespeichert in Speichereinrichtungen (13) des Mobilterminals (10).

27. Verfahren nach Anspruch 26, **dadurch gekennzeichnet, dass** das genannte bestimmte Verhalten in Verbindung steht mit dem Eingrenzen der Navigation auf einer Seite gemäß dem Navigationsprotokoll, WAP genannt, beim Senden des oder der bestimmten Fernsehprogramme und/oder mit dem vorherigen Laden eine WAP-Seite während des Sendens des oder der bestimmten Fernsehprogramme vor der Anzeige auf dem Bildschirm (11) des genannten Terminals (10).

28. Verfahren nach Anspruch 27, **dadurch gekennzeichnet, dass** der Schritt (56) zur Interpretation der genannten Information (3) selektiv eine interaktive Anwendung des Terminals (10) auslöst, durch Weiterleitung von RTP-Paketen von einem Anwendungslademodul an die genannte Anwendung.
